# EUROPEAN PATENT SPECIFICATION

(11) **EP 1 799 729 B1**
(45) Date of publication and mention of the grant of the patent: **17.10.2012**
(21) Application number: 05763502.1
(22) Date of filing: 01.07.2005
(51) Int. Cl.: C08F 283/12, C08G 77/06, C08G 77/14, C08G 77/442, C07F 7/08, C08F 293/00

(54) **FUNCTIONAL SILOXANES AND THEIR VINYL CO-POLYMERS**
FUNKTIONELLE SILOXANE UND DEREN VINYLCOPOLYMERE
SILOXANES DE FONCTION ET LEURS COPOLYMÈRES VINYLIQUES

(30) Priority: 02.07.2004 US 585416 P; 20.01.2005 US 645429 P
(43) Date of publication of application: 27.06.2007
(73) Proprietor: Honeywell International Inc., Morristown, NJ 07960 (US)
(72) Inventor: ASIRVATHAM, Edward, Chatham, New Jersey 07928-2266 (US); WASSMAN-WILKEN, Suzanne, 30173 Hanover (DE); KNEPPER, Jeffrey, A., Branchburg, New Jersey 08876 (US); GEENEN, Jacques, Madison, New Jersey 07840 (US)
(74) Representative: Hucker, Charlotte Jane
(86) International application number: PCT/US2005/023367
(87) International publication number: WO 2006/014328

(56) References cited:
- EP-A- 1 382 631
- FR-A- 1 531 637
- US-A- 5 789 516
- US-A1- 2002 183 473

## Description

### FIELD OF INVENTION

This invention relates generally to methods for producing siloxane compositions. More specifically, this invention relates to methods of producing polymerizable siloxane compositions having a polymerization site that is prepared prior to being attached to a siloxane.

### BACKGROUND

Silane and siloxane compounds constitute an important class of industrial chemicals that are commonly found in organic copolymers of various forms including fluids, gels, elastomers, and resins. By modifying a silane or siloxane with certain organofunctional groups and then linking these compounds to an organic polymer, polymers and copolymers can be formed having a wide variety of desirable physical and chemical properties such as improved impact resistance, flame resistance, heat stability, lubricity, and flow properties. Many of these compounds have use in such diverse applications as wetting agents, manufacturing processing aides, surfactants, foam control additives, pressure sensitive adhesives, thermoplastic elastomers, compatibilizing agents, water repellant materials, dry cleaning fluids, textile aids, personal and household care, preservatives, pesticides, and electronic circuits. In addition, many of these polymers and copolymers are non-toxic and environmentally compatible.

Of particular interest for the above-mentioned applications are silane-vinyl and siloxane-vinyl block and graft copolymers. Methods of producing such polymers and copolymers are known in the art as exemplified by U.S. Patent Nos. 5,708,115 (Graiver, et al.); 5,789,503 (Graiver, et al.); 5,789,516 (Graiver, et al.); and by D. Graiver, et al., "Silicones and Silicone Modified Materials", ACS Symposium Series, 729, p. 445-59. It has been reported that the physical and chemical properties of the individual polymer segments, their relative concentrations and molecular weights, and their method of preparation impact the overall morphology and properties of such copolymers. *See* D. Graiver, et al., GRAFT AND BLOCK COPOLYMERS WITH POLYSILOXANE AND VINYL POLYMER SEGMENTS, Silicon Chemistry, Vol. 1, pp. 107-120 (2002).

Preparation of silane- or siloxane-vinyl copolymers typically involves a polymerization reaction wherein a vinyl is reacted with a functional silane or siloxane, respectively. Particularly desirable functional silanes and siloxanes for these processes are those having aldehyde functionality because of the aldehyde's ability to readily participate in polymerization reactions. Methods of preparing aldehyde-functional siloxanes are known in the art. For example, U.S. Patent No. 5,739,246 (Graiver, et al.) discloses a method of preparing carbonyl functional polysiloxanes and U.S. Patent No. 5,880,304 (Graiver, et al.) discloses a method of preparing organsilicon carbonyl compounds. In addition, U.S. Patent No. 4,609,574 (Keryk, et al.) discloses a method of hydrolyzing a chlorosilane to produce a polysiloxane having an aldehyde group.

However, methods known in the art for preparing silanes and siloxanes having aldehyde functionality lack precise control of both the architectural design of the molecule and molecule's molecular weight. In general, these methods are not used in commercial applications because of the process's poor yield, occurrence of extensive side reactions, and/or significant cost associated with starting materials or the process itself.

For example, the process described by Graiver involves the formation of an aldehyde-functional siloxane wherein a siloxane having terminal olefin moieties is first subject to ozonolysis to form an intermediate ozonide and then the resulting ozonide is reacted with acetic acid in the presence of a zinc catalyst to form an aldehyde-functional siloxane having the following formula (I): 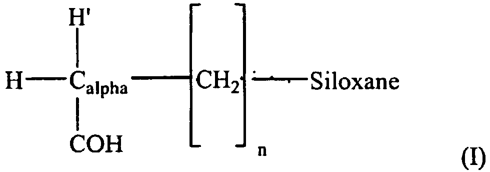 wherein n is 2 or 3.

Aldehyde-functional siloxanes synthesized by the Graiver process incur a serious limitation in that both hydrogen bonds on the alpha-carbon function indiscriminately as active polymerization sites which in turn leads to a proliferation of side-chain products when the siloxane is copolymerized. These unwanted side-reactions cause this process to be unstable. (As used herein, the term "stability" refers to the speed and selectivity of the reaction and not to the tendency to readily participate in reactions.)

The lack of control over the copolymerization reaction leads to the formation of many high viscosity, cross-linked polymers, and thus a copolymer product having a high variance in molecular weights instead of the more advantageous narrow molecular weight distribution. Inherently, this also results in low yield of the targeted product.

Moreover, the alkene reactant in the Graiver process determines the nature of the aldehyde functionality. This reactivity cannot be tailored to modify the performance of the resulting polymer or polymerization reaction. In addition, compounds formed by this process are limited to those having only aldehyde functionality (i.e. this process cannot synthesize compounds having multiple functional groups). Thus, the flexibility of aldehyde-functional siloxanes prepared by processes known in the art is limited.

### SUMMARY OF THE INVENTION

The Applicants have discovered that the aforementioned problems, among others, can be solved by synthesis methods wherein a compound comprising an aldenyde moiety, also hereinafter referred to as a redox initiator is formed prior to attaching it to a siloxane to produce a functionalized or polymerizable siloxane, respectively. This redox initiator can then serve as a customized polymerization site for the compound. Customizing the copolymerization site allows for greater control over the kinetics of the copolymerization reaction and substantially reduces unwanted side chain reactions. For example, the redox initiator can be designed to limit the availability and accessibility of the siloxane's copolymerization sites. In general, fewer copolymerization sites lead to fewer unwanted side-chain reactions. In addition, a stabilizing substituent, such as a resonance radical stabilizing functional group, can be added to the redox initiator proximal to the copolymerization site to stabilize the site during a copolymerization reaction, thus leading to better control over the reaction.

Accordingly, one aspect of the present invention is a method for preparing a polymerizable siloxane having a first step of synthesizing a redox initiator and a second step of attaching the redox initiator to the siloxane to produce a polymerizable compound. Since the redox initiator can be chosen so as to control the copolymerization reaction, the particular redox initiator synthesized will depend on the desired polymer or copolymer product, but will generally have the following formula (II): 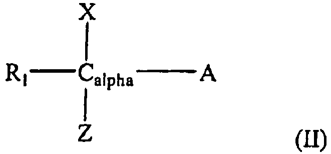 wherein:
Z is a free radical initiator;
Cₐₗₚₕₐ is the first carbon adjacent to Z;
X is an abstraction moiety;
R₁ is a stabilizing constituent; and
A is a group capable of being hydrosilylated, preferably alkene or alkyne.

Another aspect of the present invention are polymerizable siloxanes formed by the method described above. In certain preferred embodiments, the polymerizable siloxane has the formula (III): 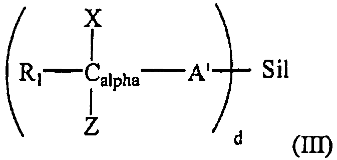 wherein R₁, X, Cₐₗₚₕₐ, and Z are defined as above, A' is a linking group formed by hydrosilylation, d is an integer from about I to about 40, and "Sil" is a siloxane moiety.

According to yet another aspect of the present invention, provided are methods for forming siloxane copolymers wherein at least one vinyl monomer or polymer is reacted with at least one polymerizable siloxane as described above to form a block or graft copolymer.

Still another aspect of the present invention are siloxane-vinyl block and graft copolymers formed by the method described above. A preferred embodiment of this aspect of the invention is a block siloxane-vinyl copolymer having the formula (V): 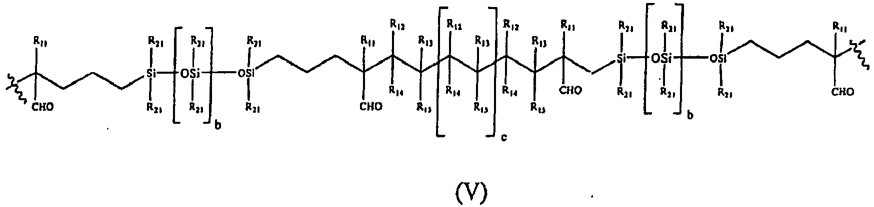
wherein R₁₁ is independently methyl, ethyl, phenyl, and the like;
R₁₂, R₁₃, R₁₄, and R₁₅ are independently H, alkyl, aryl, heterocyclic, fluoro, fluoroalkyl, acetate, acrylic, anhydride, and the like;
R₂₁ is independently methyl, ethyl, phenyl, and the like;
b is an integer from 10 to 200; and
c is an integer from 10 to 200.

### DETAILED DESCRIPTION OF THE INVENTION

Provided are methods for producing polymerizable siloxanes having a polymerization site or copolymerization site, respectively, that can be customized to efficiently produce a wide variety of block and graft copolymers. Specifically, methods are provided for producing polymerizable siloxanes wherein a redox initiator having functionality tailored to favor a specific copolymer is first synthesized and is then attached to a siloxane to form the polymerizable siloxane product. During a copolymerization reaction, copolymer linkages form at the redox initiator and, since the functionality of the redox initiator can be tailored to favor a particular copolymer product, the redox initiator functions as a customized copolymerization site.

According to a first aspect of the invention, methods of synthesizing polymerizable siloxanes are provided comprising the steps of (a) synthesizing a redox initiator functionality engineered to favor a specific copolymer; and (b) attaching the engineered redox initiator to a siloxane to form a polymerizable siloxane, respectively.

The term "redox initiator", as used herein, refers to a system which effects the radical polymerization of the monomers. Specifically, a redox initiator, when attached to a siloxane, promotes oxidative coupling between the siloxane and one or more vinyl monomers or polymers to form block or graft siloxane copolymers. This process of oxidative coupling, which is also known in the art as "redox polymerization", generally involves the transfer of electrons between the redox initiator attached to the siloxane and at least one other monomer or polymer during the polymerization or copolymerization reaction. Without being bound to any particular theory, it is believed that redox initiators suitable for the present invention accept an electron during a redox reaction, thereby creating a polymeric siloxane radical. This polymeric radical, in turn, reacts with vinylic monomers and/or polymers to form, for example, a siloxane-vinyl block or graft copolymer.

Several redox initiators are known in the art. Those suitable for use with the present invention comprise (1) a free radical initiator which serves to facilitate reduction of a silane monomer or polymeric siloxane, (2) an abstraction moiety which is removable from the redox initiator providing a pair of free electrons, (3) a tertiary alpha-carbon which functions as a copolymerization site, (4) a stabilizing constituent for controlling the copolymerization kinetics, and (5) a group capable of being hydrosilylated which serves to attach the redox initiator to the siloxane. Generally, redox initiators of the present invention will be of Formula (II): 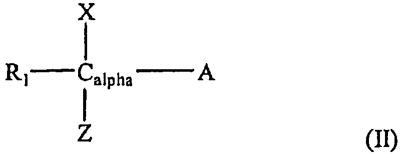 wherein:
Z is a free radical initiator, preferably aldehyde;
Cₐₗₚₕₐ is the first carbon adjacent to Z;
X is an abstraction moiety;
R₁ is a stabilizing constituent; and
A is a group capable of being hydrosilylated, preferably alkene or alkyne.

With respect to the free radical initiator, Z, it is an agent used to start the redox copolymerization reaction involving the polymerizable siloxane. The redox initiator, when attached to the siloxane, must be reducable so as to readily form a polymeric free radical. This polymeric free radical has one unpaired electron that is produced upon the splitting of a molecular bond. That is, the free radical has at least one of the bonding orbitals occupied by a single electron. Once the polymeric radical is formed, it can then undergo oxidative coupling with another monomer and/or polymer. This action starts a chain reaction wherein the radicals that are consumed by the formation of a polymer or copolymer bond are regenerated, thereby leading to the formation a polymer or copolymer.

According to the present invention, the free radical initiator is an aldehyde.

With respect to the abstraction moiety, X, it is the moiety that leaves the molecule in order to create the polymeric free radical. Generally, the abstraction site becomes the location of polymeric linkage. According to the present invention, these abstraction moieties are a hydrogen or a halogen. Therefore, the abstraction moiety may be hydrogen, chlorine, bromine, or iodine.

With respect to the stabilizing constituent, R₁, it is a moiety that stabilizes the free radical formed during the polymerization reaction, preferably by resonance forces. It is known that more stable free radicals form more easily. That is, the ease at which radical formation occurs (i.e. the acceptance of an electron and corresponding abstraction of hydrogen or halogen) increases as the stability of the resulting free radical increases. The dissociation energy of the abstraction moeity bond generally provides a measurement of the relative inherent stability of the free radical. With respect to carbon-based free radicals, stability order is as follows:
Tertiary > Secondary > Primary > CH₄ > Vinylic

Increasing the number of alkyl substituent on the radical center generally leads to an increase in stability, which is thought to be caused by hyperconjugation. Thus, redox initiators having a radical on a tertiary carbon (i.e. a carbon having only one abstraction moeity) are preferred to redox initiators having a radical on a secondary carbon because the the tertiary carbon-centered radical is more stable due to more distinct resonance stabilization. Such tertiary carbon-centered radicals are formed, for example, by R₁ being an alkyl or a phenyl.

The stability of free radicals of the present invention is also enhanced by the presence at the radical center of either an electron-donating group or an electron withdrawing group. It is believed that this increased stability arises from the further increase in resonance. Examples of R₁ as an electron donating group include, but are not limited to, alkyloxy, aryloxy, thioethers, dialkylamines, or an phenyl substituted, preferably at the fourth carbon, with an alkyoxy, aryloxy, thioether, or dialkylamine. Particularly preferred alkyloxies include those having the formula -O-R₂, wherein R₂ is a C₁-C₃ alkyl. Particular preferred aryloxies include those having the formula -O-(C₆H₆). Particularly preferred thioethers include those having the formula -S-R₃, wherein R₃ is a C₁-C₃ alkyl or a phenyl. Particular preferred dialkylamines include those having the formula -N(R₄)₂, wherein R₄ is methyl, ethyl, or phenyl. Examples of R₁ as an electron withdrawing group include, but are not limited to aryls substituted, preferably at the fourth carbon, with nitro, nitrile, aldehyde, C₁ - C₃ ketone, or C₁ - C₃ ester.

The particular R₁ substituent incorporated into the redox initiator will depend on the desired reaction kinetics, which can easily be determined by those skilled in the art without undue experimentation. Thus, for copolymerization reactions requiring a decrease in speed and an increase in selectivity, a redox initiator is synthesized having a substituent capable of resonance stabilizing a free radical, such as aromatic rings. In contrast, for copolymerization reactions requiring an increase in speed and a decrease in selectivity, a redox initiator is synthesized with a group having less resonance stabilizing characteristics, such as methyl. The functionality of the R₁ substituent may also be considered in choosing a particular R₁.

Redox initiators having tertiary carbons are also preferred because polymerization occurs at the site of the hydrogen abstraction and, in the case of tertiary carbons, there is only one abstration site. Restriction of the polymerization reaction to a single site reduces the uncontrolable side-chain reactions and the resulting undesired cross-linked polymers.

With respect to the group capable of being hydrosilylated, A, it is a functional moeity capable of bonding to a silane or siloxane, preferrably via a hydrosilylation reaction, although any chemical process known in the art may be used. Such a hydrosilylation reaction occurs at a silicon-hydrogen bond of a silane or siloxane and involves the addition of the silane or siloxane across the terminal carbon-carbon double bond or triple bond of the redox initiator. Thus, A is a C₂-C₆ alkene or C₂-C₆ alkyne, and more preferably a C₃ alkene or alkyne having its double or triple bond, respectively, at a terminal end of the redox initiator distal to the aldehyde group.

Typically, the hydrosilylation process is carried out in the presence of a catalyst, such as platinum. In certain preferred embodiments, the redox initiator bearing the carbon-carbon double or triple bond that can be hydrosilylated attaches terminally to one or both ends of the siloxane, or pendently to the siloxane backbone. Preferred groups capable of being hydrosilylated include vinyl moieties, such as 1-propenyl, 1-butenyl, 1-pentenyl, and the like.

In certain preferred embodiments, the redox initiator of Formula (II) can be further defined wherein:
A is 3-vinyl or 3-allyl;
X is hydrogen, chlorine, bromine, or iodine;
Z is aldehyde, more preferably methanal, or an aldehyde derived from an acetal such as dimethylacetal; and
R₁ is C₁ - C₃ alkyl, alkyloxy, aryloxy, thioethers, dialkylamines, or an aryl substituted with an alkyoxy, aryloxy, thioether, dialkylamine, nitro, nitrile, aldehyde, C₁ - C₃ ketone, or C₁ - C₃ ester.

In certain preferred embodiments, these redox initiators are pendently or terminally attached to the siloxane.

Particularly preferred redox initiators include 2-methyl-4-pentenal, 2-methyl-2-bromo-4-pentenal, 2-ethyl-4-pentenal, 2-ethyl-2-bromo-4-pentenal, 2-phenyl-4-pentenal, and 2-phenyl-2-bromo-4-pentenal. Particularly preferred redox initiators wherein Z is an aldehyde derived from an acetal include aldehydes derived from 2-methyl-(1,1'-dimethoxy)-4-pentene, 2-ethyl-(1,1'-dimethoxy)-4-pentene, 2-phenyl-(1,1'-dimethoxy)-4-pentene, 2-methyl-2-bromo-(1,1'-dimethoxy)-4- pentene, 2-ethyl-2-bromo-(1,1'-dimethoxy)-4-pentene, or 2-phenyl-2-bromo-(1,1'-dimethoxy)-4-pentene.

Alternatively, these and other aldehydes can be synthesized by methods known in the art. For example, substituted-4-pentenals suitable for the present invention can be synthesized as described in U.S. Pat. No. 3,928,644, wherein 2-phenyl-4-pentenal is synthesized from phenyl acetaldehyde.

After the redox initiator is synthesized, it is attached to a siloxane as described above.

As used herein, the term "siloxane" refers to straight-chain, cyclic, and polycyclic compounds having silicon atoms single-bonded to oxygen atoms and so arranged that each silicon atom is linked to at least one oxygen atom. Preferably, siloxanes of the present invention will be silicones (i.e. siloxane polymers based upon a structure consisting of alternating silicon and oxygen atoms with various organic radicals attached to the silicon atoms). In addition, siloxanes suitable for the present invention have at least one silicon-hydrogen bond which serves as the attachment site for the redox initiator. Thus, preferable siloxanes include hydride end-capped siloxanes, mono hydride terminal siloxanes, and pendent or "rake" hydride siloxanes. Preferably, siloxanes for use with the present invention will be of the following formula (VII): 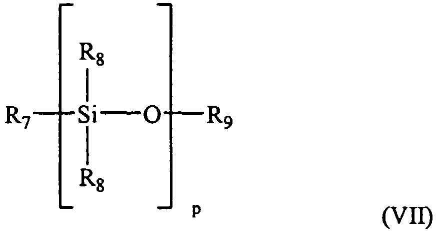
wherein R₇ is H, C₁ - C₅₀ straight or branched alkyl, C₃ - C₁₂ substituted or unsubstituted cyclic, C₁ - C₁₁ heterocyclic, C₆ - C₈ aryl, C₆ - C₈ aryloxy, C₁ - C₁₂ alkoxy, C₂ - C₁₂ di-alkylamino, C₁ - C₁₂ alkylthio, C₁ - C₁₂ fluoroalkyl, C₁ - C₁₂ epoxy, C₁ - C₆ acrylic or methacryoxy, C₆ - C₅₀ polyether, or some combination thereof;
R₈ is independently H, -O-R₉, O bonded to Si so as to produce a cyclic or polycyclic form, C₁ - C₅₀ straight or branched alkyl, C₃ - C₁₂ substituted or unsubstituted cyclic, C₁ - C₁₁ heterocyclic, C₆ - C₈ aryl, C₆ - C₈ aryloxy, C₁ - C₁₂ alkoxy, C₂ - C₁₂ di-alkylamino, C₁ - C₁₂ alkylthio, C₁ - C₁₂ fluoroalkyl, C₁ - C₁₂ epoxy, C₁ - C₆ acrylic or methacryoxy, C₆ - C₅₀ polyether, or some combination thereof;
R₉ is 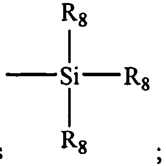 and
p is an integer from 3 to 40,
provided that for non-cyclic siloxanes, R₇ = H and R₈ ≠ H for mono-hydride terminal siloxanes; R₇ = H and the terminal R₈ = H for hydride end-capped siloxanes; and R₇ ≠ H, the terminal R₈ ≠ H, and at least one R₈ = H for rake hydride siloxanes.

In certain preferred embodiments, hydride end-capped siloxanes, mono hydride siloxanes, and rake hydride siloxanes have one of the following formulae: 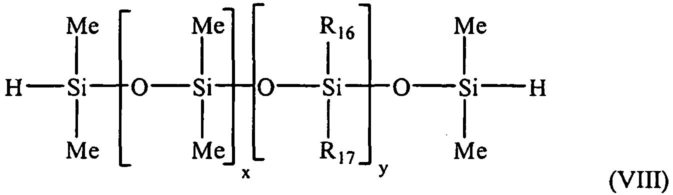 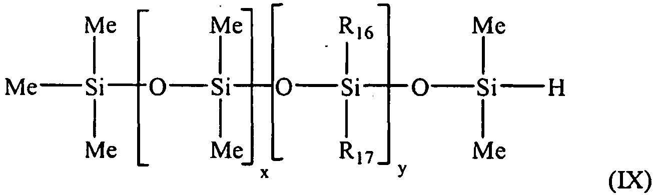 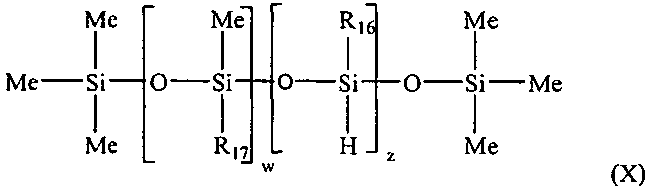 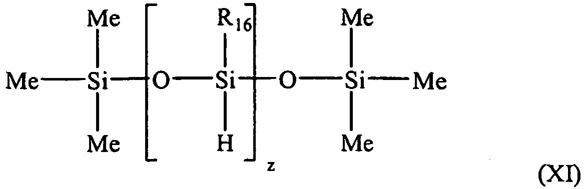 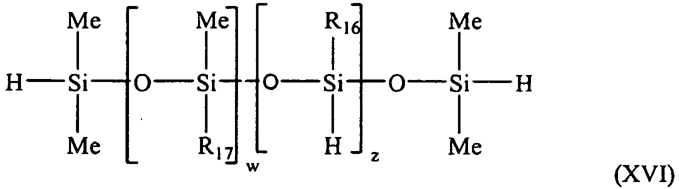
wherein R₁₆ and R₁₇ are independently methyl or phenyl,
x is an integer from 0 - 80,
y is an integer from 0 - 80,
x + y ≠ 0,
w + z is an integer from 3 - 40, and
z is an integer from 1 - 40.

Siloxanes according to the present invention are commercially available from a variety of sources, including for example, dimethylsiloxane - hydrogen terminated (CAS No. 70900-21-9) from Dow Coming, and dimethyl, methylhydrogensiloxane - trimethylsiloxy terminated (CAS No. 68037-59-2) also from Dow Coming.

Alternatively, these and other siloxanes may be prepared by any means known in the art. For example, a polydimethylsiloxane (PDMS) having terminal silicon-hydride functionality may be formed by reacting octamethylcyclotetrasiloxane with dimethyl silane in the presence of CF₃SO₃H. A polydimethyl siloxane having pendent silicon-hydride functionality may be formed by reacting octamethylcyclotetrasiloxane and 1,3,5,7-tetramethylcyclotetrasiolxane with tetramethyldisiloxane (TMDS) in the presence of CF₃SO₃H.

Once the redox initiator is attached to the siloxane, the compound can participate in a redox copolymerization reaction with vinyl monomers or polymers.

The term "polymerizable siloxane", as used herein, refers to siloxane polymer having functional group capable of transforming the siloxane compound into a polymeric radical during a copolymerization process. Thus, according to another aspect of the present invention, provided are novel siloxanes having terminal or pendent functionality, and specifically aldehyde, functionality.

Polymerizable siloxanes of the present invention may be produced by any chemical process known in the art wherein a redox initiator is attached to a silicon atom of the siloxane. As indicated above, a preferred method of attaching a redox initiator to the silicon atom is via hydrosilylation. Such hydrosilylation reactions occur at a silicon-hydrogen bond and involve the addition of a siloxane across a carbon-carbon double bond of the redox initiator. Typically, the hydrosilylation process is carried out in the presence of a catalyst, such as a platinum catalyst.

In certain preferred embodiments, polymerizable silanes and siloxanes of the present invention will be of Formula III: 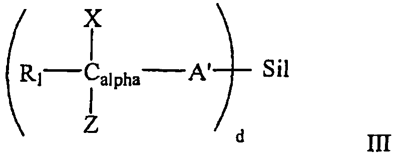 wherein R₁, X, Cₐₗₚₕₐ, and Z are defined as above, A' is a linking group formed via hydrosilylation, d is an integer from about 1 to about 40, and "Sil" is a siloxane moiety. Since hydrosilylation involves the addition of the siloxane across carbon-carbon double bond of the moeity A, typically A' will be an alkyl derived from alkene A. By way of example, if A is 2-propenyl, the corresponding hydrogenated form A' will be propyl, and so forth.

In certain other preferred embodiments, a hydrosilylation process can also be used to incorporate other functional olefins into the siloxane to produce novel polymerizable siloxanes. That is, the terminal double carbon bond of functional groups such as ethylene, propylene, styrene, epoxy, acrylic, arcyloxy, and polyether, among others, can undergo hydrosilylation in the presence of a catalyst, such as platinum, wherein the functional group attaches to a silicon atom of the silane or siloxane. For example, multifunctional rake siloxanes can be produced from trimethylsiloxy terminated polyalkylhydrosiloxane as shown below: 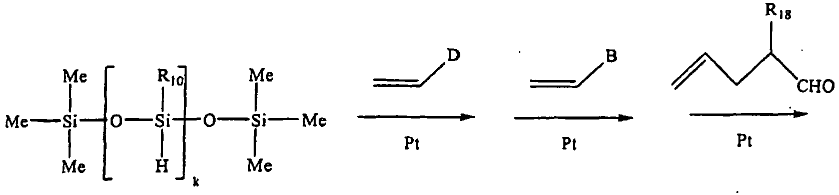 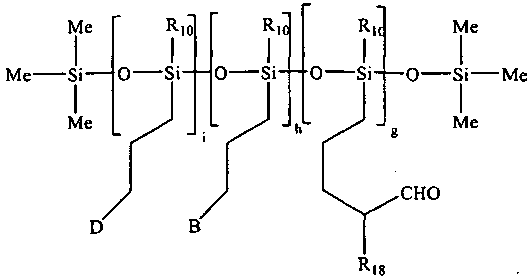
wherein R₁₀ is, for example, methyl or phenyl;
R₁₈ is, for example, alkyl, aryl, alkyoxy, aryloxy, di-alkylamino, alkylthio, or fluroralkyl;
D is, for example, ethylene, propylene, C₂ - C₅₀ alkyl, styrene, or 1-methyl styrene;
B is, for example,
   an epoxy having the formula: 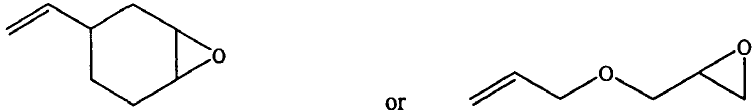 an acrylic or methacryloxy having the formula: 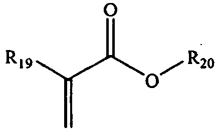 wherein R₁₉ is H or CH₃ and R₂₀ is CH₃, C₂H₅, or CH₂CH₂OH, or
   a polyether having the formula: 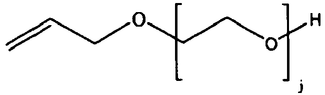 wherein j is an integer from 2 - 20;
k is an integer from 3 - 40; and
i + h + g = k, wherein g ≠ 0.

Other preferred polymerizable siloxanes according to the present invention, include, but are not limited to, those having one of the formulas (XII) - (XIV): 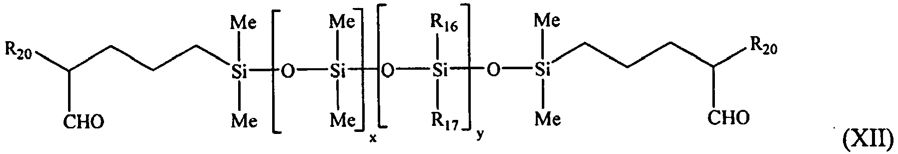 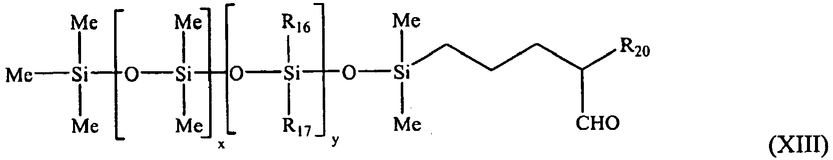 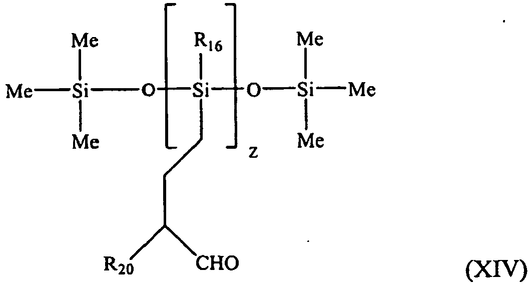 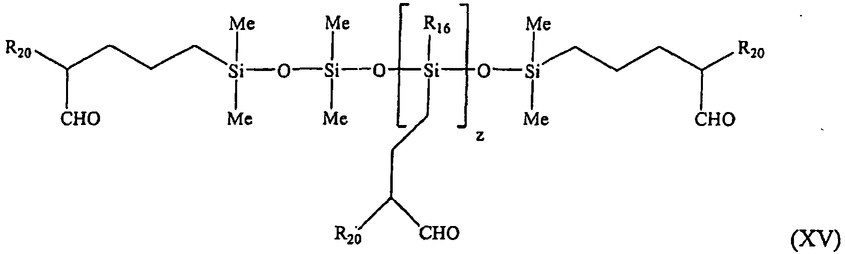
wherein R₁₆, R₁₇, x, y, and z are defined as above; and
R₂₀ is methyl, ethyl, or phenyl.

It is understood that the polymerizable siloxanes mentioned above are merely exemplary and that many other embodiments of the present invention are also contemplated, including but not limited to, cyclic siloxanes, polycyclic siloxanes, and siloxanes having different functional groups attached to the silicon atoms.

According to another aspect of the present invention, methods for preparing block and graft copolymers are provided wherein a polymerizable siloxane, such as those described above, is reacted with a vinyl monomer and/or polymer in the presence of a catalyst to produce a siloxane-vinyl copolymer.

As used herein, the term "vinyl" refers to a moiety having, or being derived from, at least the functional group CH₂==CH-. The term "vinyl monomer", as used herein, generally refers to vinyl compounds (i.e. compounds having a vinyl functional group), which includes, but is not limited to vinyl chloride, vinyl acetate and similar esters, styrenes, methacrylates, acrylonitriles, and the like. Preferably, the copolymerization reaction involves the formation of a polymeric siloxane radical which is reacted with a vinyl monomer or polymer to yield the siloxane-vinyl copolymer.

In a particularly preferred embodiment, the copolymerization process includes the step of mixing aldehyde-functional polymerizable siloxanes with a vinyl monomer and a copper (II) redox catalyst system in a suitable solvent such as benzene, toluene, xylene, glycol, or the like, and heated to 60 ° C - 125°C for from about 5 to about 24 hours. For preparation of siloxane-polyfluoroolefins, a fluorinated solvent can be used. Once the polymerization reaction is complete, the reaction mixture is cooled to room temperature ant mixed with a protic solvent, such as methanol, and the like, to precipitate the copolymer product. The solid product is then washed with a solvent, dried, and purified using typical polymerization techniques known in the art.

The selection of a vinyl monomer for the copolymerization reaction is dependent upon the desired copolymer product. Examples of vinyl monomers that may be used in the present invention include, but are not limited to, ethylene, propylene, styrene, N-vinyl pryrrolidone, vinylidene fluoride, chloroflouoroethylene, methyl methacrylate, ethyl methacrylate, acrylonitrile, hydroxyethyl methacrylate, vinyl acetate, and maleic anhydride. Other examples of vinyl monomers include fluoro olefin monomers such as 3,3,3-trifluoro-1-propene; 2,3,3,3-tctrafluoro-1-propene; 1,3,3,3-tetrafluoro-1-propene; 1-chloro-1,3,3,3-tetrafluoro-1-propene; 2,2,3,3,3-pentafluoro-1-propene; 4-vinyl-pyridine; and the like.

Depending on the starting materials selected for use in the above-described process, a wide range of novel siloxane-vinyl block and graft copolymers can be efficiently obtained. As used herein, the term "block copolymer" refers to a linear copolymer wherein several monomers of a single first species are proximally connected and then sequentially connected to another chain of proximally connected monomers of another single species that is different than the first species. The term "graft copolymer", as used herein, refers to a non-linear copolymer wherein one or more chains consisting of a single species of monomer are connected to a main polymer chain of a different species as side-chains. Thus, according to yet another aspect of the present invention, provided are novel siloxane-vinyl block and graft copolymers. In certain preferred embodiments, the siloxane-vinyl block polymer will be of Formula (X): 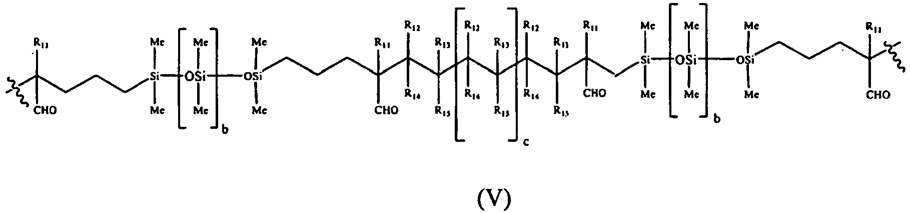
wherein R₁₁ is methyl, ethyl, phenyl, and the like;
R_{12,} R₁₃, R₁₄, and R₁₅ are independently H, alkyl, aryl, heterocyclic, fluoro, fluoroalkyl, acetate, acrylic, anhydride, and the like;
b is an integer from 10 to 200; and
c is an integer from 10 to 200.

In certain other preferred embodiments, the siloxane-vinyl is a graft copolymer. It is understood that graft copolymers according to the present invention may utilize the siloxane moieties either as the backbone portion of the copolymer, such as for example, the structure: 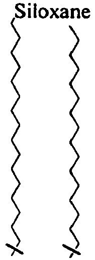 or as the pendent portion of the copolymer, such as for example, the structure:

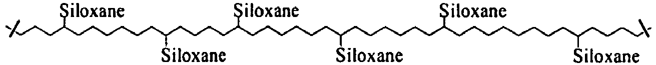

Additionally, by engineering the redox initiator, the copolymerization reactions which occur are more selective thereby leading to a higher yield and better process control of, and less side products in, the desired product stream. As used herein, the term "product stream" refers to a process wherein siloxane and vinyl monomers are reacted to form a product of block or graft copolymers. Although the term "stream" is used, it should be understood that the present invention can be applied to batch or continuous processes. The term "product yield" refers to the weight percentage of targeted copolymer that is formed via a product stream based upon the weight of the reactants.

### EXAMPLES

The present invention is further described in light of the following examples which are intended to be illustrative but not limiting in any manner.

### Example 1:

Hydrosilylation of 2-phenyl-pentenal with tetramethyldimethylsiloxane (TMDS):

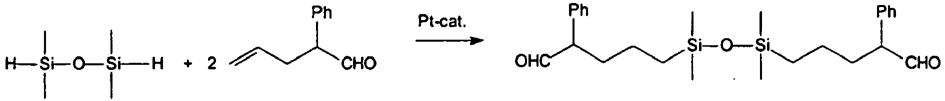

### Reagents:

1.4 g tetramethyldimethylsiloxane (TMDS) (0.01 mol)
60 ppm (Pt) Karstedt-catalyst in xylene
3.5 g 2-phenyl-4-pentenal (appr. 92%, 0.02 mol), CAS Number: [24401-36-3]

The reagents are mixed, degassed with nitrogen and heated to 85°C for 24 hours. The mixture turns dark. After filtration over active charcoal, IR shows complete disppearance of the Si-H-group, GC shows now TMDS, some residual pentenal and the di-subsituted product which is also analyzed by GC-MS. The excess 2-phenyl-4-pentenal can be removed by distillation.

### Example 2:

Hydrosilylation of 2-phenyl-pentenal with Polydimethylsiloxane (PDMS):

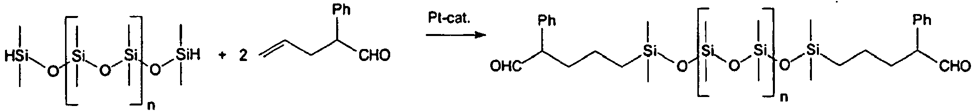

### Reagents:

5 g Polydimethylsiloxane (PDMS) (Gelest, MW 400-500, active H 0.5%)
60 ppm (Pt) Karstedt-catalyst in xylene
3.5 g 2-phenyl-4-pentenal

The reagents are mixed, degassed with nitrogen and heated to 85°C for 24 hours. After filtration over active charcoal, IR shows complete disppearance of the Si-H-group, ¹H-NMR shows complete disappearance of the Si-H-group, some residual 2-phenyl-4-pentenal and a group of signals concurrent to the new compound. The excess 2-phenyl-4-pentenal can be removed by distillation.

### Example 3:

Cu(II)-catalyzed copolymerization of styrene with 2-phenylpentanal-modified PDMS:

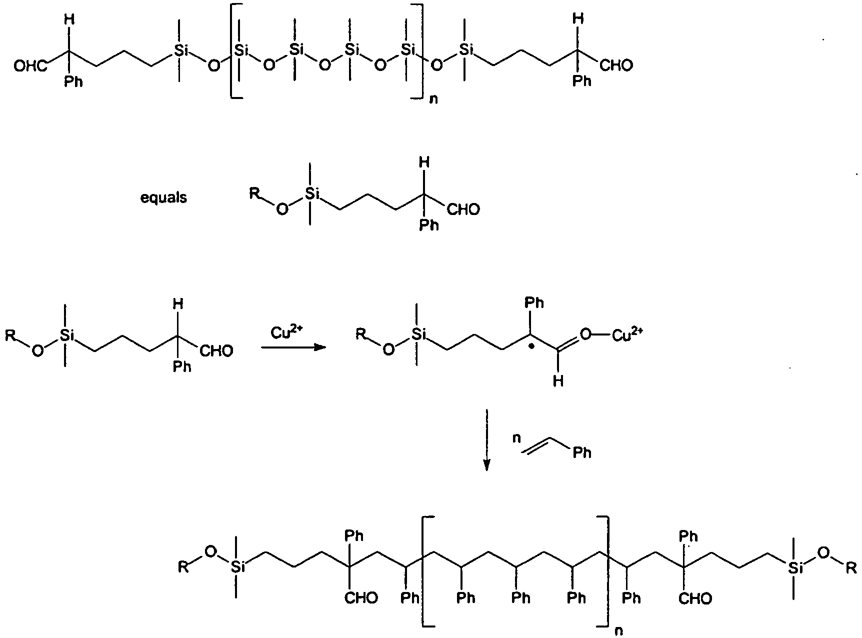

### Reagents:

10 ml chlorobenzene (dry)
0.1 g (2.68 x 10⁴ mol) copper(II)-ethylhexanoat
0.5 g pyridine
0.3 g triphenylphosphine (0.3 g, 1.14 x 10⁻³ mol)
0.1 g triethylamine (1 x 10⁻³ mol)
5 mL styrene

2-phenylpentanal-modified PDMS (3.1 x 10⁻⁴ mol aldehyde functions), Copper(II)-ethylhexanoat, pyridine, triphenylphosphine and triethylamine are added to chlorobenzene, the mixture turns green. Styrene and 2-phenylpentanal-modified PDMS are added and the mixture is degassed for 5 minutes with N₂. The mixture is heated at 70°C for about 20-24 hours. The colour is a less intensive green, the mixture is more viscous. After cooling the mixture to room temperature, it is quenched into 20 mL MeOH under vigorous stirring. A polymer precipitate forms. The precipitate is filtered and washed with MeOH, then dried under vacuum at room temperature.

### Example 4:

This example demonstrates the hydrosilylation of H-terminatetd PDMS MW 1100 and 2-phenyl-4-pentenal.

250 g (0.238 mol) DMS-H11 (Gelest, Inc., Morrisville, PA19067, USA) and 83 g 2-phenyl-4-pentenal (0.5 mol) are heated to 85°C with stirring and under inert atmsophere. A total of 0.96 mL Karstedt catalyst (Aldrich, 0.1m in xylenes) are added in 4 portions, with a reaction time of 2 hours between each addition. After the first catalyst addition, the temperature rises from 85° to 110°C. After completed catalyst addition, the mixture is stirred at 85°C overnight. A sample shows complete conversion of the Si-H in the IR. The mixture is filtered over a carbon filter and the excess 2-phenyl-4-pentenal is distilled off.

### Example 5:

This example demonstrates the hydrosilylation of H-terminated PDMS MW 6000 and 2-phenyl-4-pentenal.

9 g (1.5 mmol) DMS-H21 (Gelest, Inc), 1.88 µl Karstedt catalyst solution (Johnson Matthey, 4% in isopropanol) and 0.53 g 2-phenyl-4-pentenal (3.3 mmol) are stirred in 45 mL isopropanol and heated to 83°C under inert atmosphere for 48h. IR analysis shows complete turnover of the SiH band.

### Example 6:

This example demonstrates the hydrosilylation of H-terminated PDMS MW 550 and 2-phenyl-4-pentenal.

The procedure of example 4 is conducted, except replacing DMS-H11 (Gelest, Inc) with the same molar amount of DMS-H03 (Gelest, Inc). IR analysis shows complete turnover of the SiH band.

### Example 7:

This example demonstrates the copolymerization of styrene with 2-phenyl-4-pentanal-modified PDMS-H03.

5 mL styrene, 5 mL of copper-catalyst solution (44 mL chlorobenzene, 5 mL pyridine, 1 g copper (II)-ethylhexanoate, 1.36 mL triethylamine and 1.5 g triphenylphosphine) and 150 mg of hydrosilylation product (as macroinitiator) from Example 6 are degassed with nitrogen and heated to 80°C with stirring under nitrogen-atmosphere for 21h. The thick mixture is diluted with another 15 mL chlorobenzene and added to 150 mL of methanol while stirring with an Ultraturrax homogenizer. The white solid is filtered and washed with 75 mL methanol, then dried. The yield is 2.3 g, GPC determination of average molecular weight is 300000.

### Example 8:

This example demonstrates the copolymerization of 4-vinylpyridine with 2-phenyl-4-pentanal-modified PDMS-H03.

5 mL 4-Vinylpyridine, 5 mL of copper-catalyst solution (44 mL chlorobenzene, 5 mL pyridine, 1 g copper (II)-ethylhexanoate, 1.36 mL triethylamine and 1.5 g triphenylphosphine) and 150 mg of hydrosilylation product (as macroinitiator) from Example 6 are degassed with nitrogen and heated to 70°C with stirring under nitrogen-atmosphere for 21h. The result is a completely polymerized product, which forms a gum-like plug.

### Example 9:

This example demonstrates the copolymerization of methacrylic acid ethyl ester with 2-phenyl-4-pentanal-modified PDMS-H03.

5 mL (4.6 g) methacrylic acid ethyl ester, 5 mL of copper-catalyst solution (44 mL chlorobenzene, 5 mL pyridine, 1 g copper (II)-ethylhexanoate, 1.36 mL triethylamine and 1.5 g triphenylphosphine) and 150 mg of hydrosilylation product (as macroinitiator) from Example 6 are degassed with nitrogen and heated to 70°C with stirring under nitrogen-atmosphere for 21h. The thick mixture is diluted with 3 5mL-portions of chlorobenzene and added to 150 mL methanol at 15-20°C whilst stirring with an Ultraturrax homogenizer. After stirring for another 15 minutes, the wax-like product is decanted, 100 mL methanol are added and the mixture is stirred with an Ultraturrax homogenizer at -5 to 0°C. The product is then filtered, washed with methanol and dried at 30 mbar and 30°C. Yield is 3.1 g white, slightly sticky solid, GPC determination of average molecular weight is 295000.

### Example 10.

The procedure in Example 9 is repeated, but leaving out the hydrosilylation product from Example 6 as macroinitiator. No polymerization is observed.

Having thus described a few particular embodiments of the invention, various alterations, modifications, and improvements will readily occur to those skilled in the art. Such alterations, modifications, and improvements, as are made obvious by this disclosure, are intended to be part of this description though not expressly stated herein, and are intended to be within the scope of the invention. Accordingly, the foregoing description is by way of example only, and not limiting. The invention is limited only as defined in the following claims and equivalents thereto.

## Claims

1. A method for preparing functionalized siloxanes comprising the steps of:
(a) providing a compound comprising an aldehyde moiety which has the formula (II) : 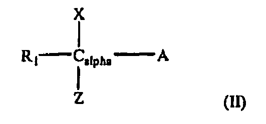 wherein:
Z is aldehyde;
Cₐₗₚₕₐ is the first carbon adjacent to Z;
X is selected from the group consisting of hydrogen, chloride, bromide and iodide;
R₁ is selected from the group consisting of C₁-C₃ alkyl, C₆ aryl, C₁-C₃ alkyloxy, C₁-C₃ thioethers, diphenyl thioether, nitro, nitrile, C₁-C₃ ketone, C₁-C₃ ester, dimethylamine, diethylamine, diphenylamine, C₆ aryloxy, and C₆ aryl having a substition at the fourth carbon ring selected from nitro, nitrile, aldehyde, C₁-C₃ ketone, C₁-C₃ ester, C₁-C₃ alkyl, C₆ aryl, C₁-C₃ alkyloxy, C₁-C₃ thioethers, diphenyl thioether, dimethylamine, diethylamine, diphenylamine and C₆ aryloxy; and
A is a C₂-C₆ alkene or C₂-C₆ alkyne; and
(b) attaching said compound of formula II to a siloxane to form a functionalized siloxane.

2. The method of claim 1, wherein A is selected from the group consisting of 2-vinyl, 3-allyl, or 4-butenyl.

3. The method of claim 1, wherein R1 is selected from the group consisting of methyl, ethyl, propyl, and phenyl.

4. The method of claim 1, wherein said compound of formula II is selected from the group consisting of 2-methyl-4-pentenal, 2-methyl-2-bromo-4-pentenal, 2-ethyl-4-pentenal, 2-ethyl-2-bromo-4-pentenal, 2-phenyl-4-pentenal, and 2-phenyl-2-bromo-4-pentenal.

5. The method of claim 1, wherein said compound of formula II derived from 2-methyl-(1,1'-dimethoxy)-4-pentene, 2-ethyl-(1,1'-dimethoxy)-4-pentene, 2-phenyl-(1,1'-dimethoxy)-4-pentene, 2-methyl-2-bromo-(1,1'-dimethoxy)-4-pentene, 2-ethyl-2-bromo-(1,1'-dimethoxy)-4-pentene, or 2-phenyl-2-bromo-(1,1'-dimethoxy)-4-pentene.

6. The method of claim 1, wherein said compound of formula II has the formula: 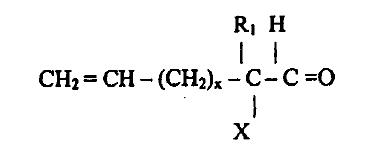
wherein R₁ is methyl or phenyl;
X is hydrogen; and
x is 1 or 2.

7. The method of claim 1, wherein said siloxane has the formula: 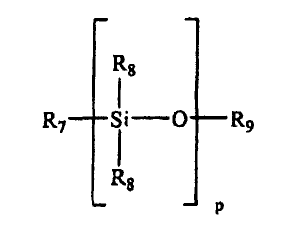
wherein R₇ is selected from the group consisting of H, C₁ - C₅₀ straight or branched alkyl, C₃ - C₁₂ substituted or unsubstituted cyclic, C₁ - C₁₁ heterocyclic, C₆ - C₈ aryl, C₆ - C₈ aryloxy, C₁ - C₁₂ alkoxy, C₂ - C₁₂ di-alkylamino, C₁ - C₁₂ alkylthio, C₁ - C₁₂ fluoroalkyl, C₁ - C₁₂ epoxy, C₁ - C₆ acrylic or methacryoxy, C₆ - C₅₀ polyether, and some combination thereof;
R₈ is independently selected from the group consisting of H, -O-R₉, O bonded to Si wherein a cyclic or polycyclic structure is produced, C₁ - C₅₀ straight or branched alkyl, C₃ - C₁₂ substituted or unsubstituted cyclic, C₁ - C₁₁ heterocyclic, C₆ - C₈ aryl, C₆ - C₈ aryloxy, C₁ - C₁₂ alkoxy, C₂ - C₁₂ di-alkylamino, C₁ - C₁₂ alkylthio, C₁ - C₁₂ fluoroalkyl, C₁ - C₁₂ epoxy, C₁ - C₆ acrylic or methacryoxy, C₆ - C₅₀ polyether, or some combination thereof;
R₉ is 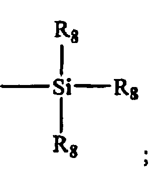 and
p is an integer from 3 to 40, provided that for non-cyclic siloxanes, R₇ = H and R₈ ≠ H for mono-hydride terminal siloxanes; R₇ = H and the terminal R₈ = H for hydride end-capped siloxanes; and R₇ ≠ H, the terminal R₈ ≠ H, and at least one R₈ = H for rake hydride siloxanes.

8. The method of claim 7, wherein said siloxane has a formula selected from the group consisting of: 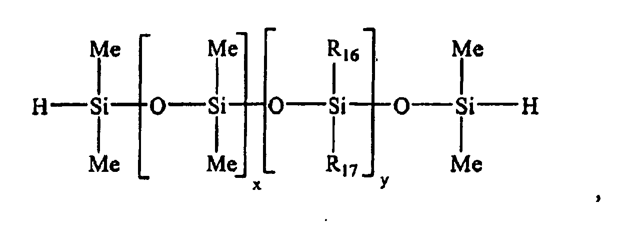 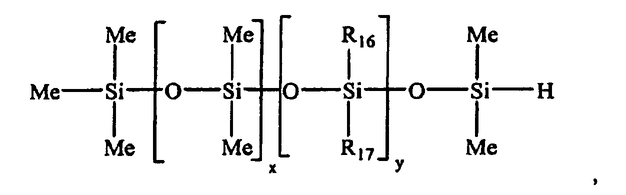 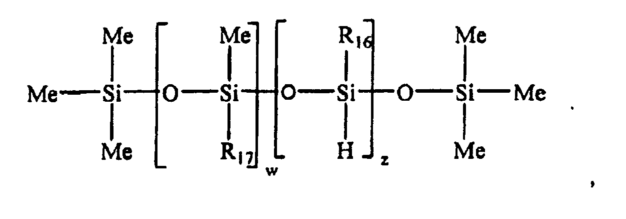 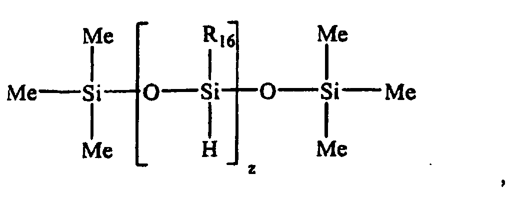 and 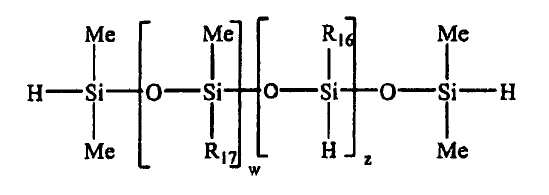
wherein R₁₆ and R₁₇ are independently methyl or phenyl,
x is an integer from 0 - 80,
y is an integer from 0 - 80,
x + y ≠ 0,
w + z is an integer from 3 - 40, and
z is an integer from 1- 40.

9. The method of claim 1, wherein said attaching step comprises a hydrosilylation process.

10. The method of claim 9, wherein said hydrosilylation process occurs in the presence of a platinum catalyst.

11. The method of claim 9, further comprising the step of:
(c) attaching a vinylic compound to said functionalized siloxane, wherein said vinylic compound is selected from the group consisting of C₂ - C₂₀ alkene, styrene, epoxy, acrylic, acryloxy, and C₄ - C₂₀ polyether.

12. The method of claim 11, wherein said functionalized siloxane has the formula: 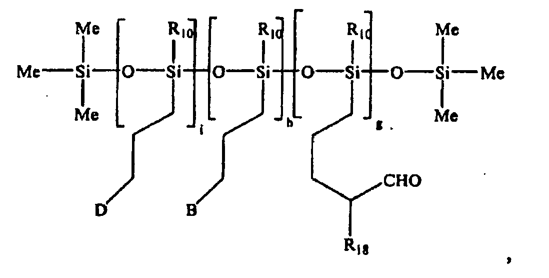 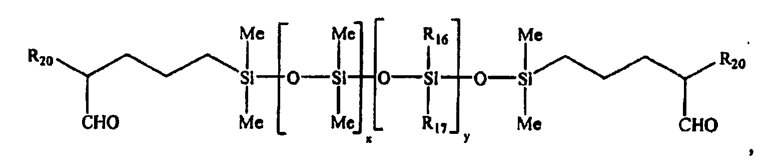 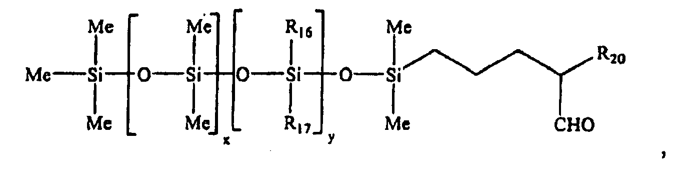 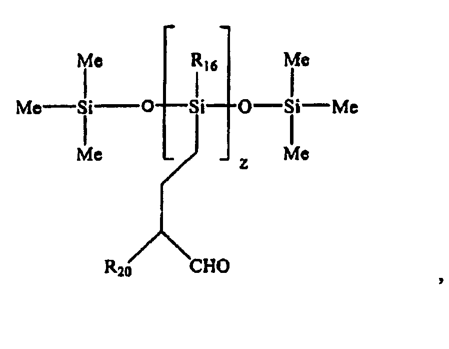 and 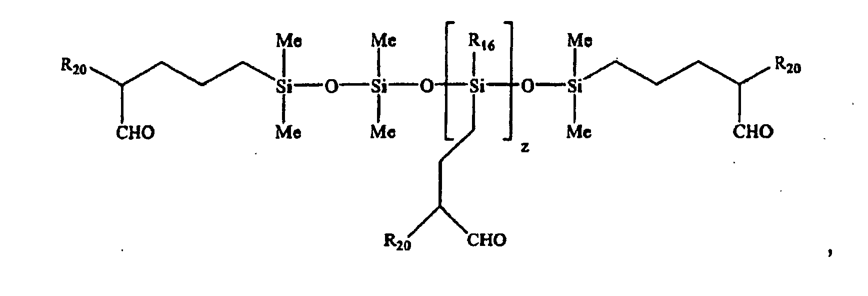
wherein R₁₀ is methyl or phenyl;
R₁₆ and R₁₇ are independently methyl or phenyl,
R₁₈ is selected from the group consisting of C₁ - C₃ alkyl, C₆ aryl, C₁ - C₃ alkyloxy, C₁ - C₃ thioethers, diphenyl thioether, nitro, nitrile, C₁ - C₃ ketone, C₁ - C₃ ester, dimethylamine, diethylamine, diphenylamine, C₆ aryloxy, and C₆ aryl having a substition at the fourth carbon ring selected from nitro, nitrile, aldehyde, C₁ - C₃ ketone, C₁ - C₃ ester, C₁ - C₃ alkyl, C₆ aryl, C₁ - Cos alkyloxy, C₁ - C₃ thioethers, diphenyl thioether, dimethylamine, diethylamine, diphenylamine, and C₆ aryloxy.
R₂₀ is methyl, ethyl, or phenyl;
D is selected from the group consisting of ethylene, propylene, C₂ - C₅₀ alkyl, styrene, or 1-methyl styrene;
B is selected from the group consisting of epoxy having the formula: 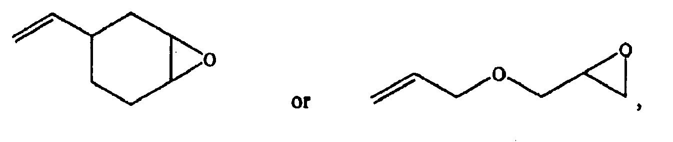 acrylic,
methacryloxy having the formula: 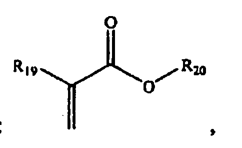
wherein R₁₉ is H or CH₃, and
R₂₀ is selected from the group consisting of CH₃, C₂H₅, and CH₂CH₂OH, and polyether having the formula: 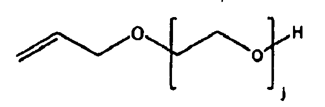
wherein j is an integer from 2 - 20;
x is an integer from 0 - 80,
y is an integer from 0 - 80,
x + y ≠ 0, and
z is an integer from 1 - 40.
k is an integer from 3 - 40; and
i + h + g = k, wherein g 0.

13. The method of claim 1, wherein said functionalized siloxane has a cyclic or polycyclic structure.

14. A method of producing a copolymers comprising the steps of:
(a) providing a functionalized siloxane according to claim 1,
(b) providing a vinylic compound, and
(c) reacting said functionalized siloxane with said vinyl compound to produce a copolymer.

15. The method of claim 14, wherein said vinyl compound is a monomer or polymer having a vinyl functional group.

16. The method of claim wherein said vinyl compound is selected from the group consisting of ethylene, propylene, styrene, N-vinyl pryrrolidone, vinylidene fluoride, chloroflouoroethylene, methyl methacrylate, ethyl methacrylate, acrylonitrile, hydroxyethyl methacrylate, vinyl acetate, maleic anhydride, 3,3,3-trifluoro-1-propene, 2,3,3,3-tetrafluoro-1-propene, 1,3,3,3-tetrafluoro-1-propene, 1-chloro-1,3,3,3-tetrafluoro-1-propene, 2,2,3,3,3-pentafluoro-1-propene, and 4-vinyl-pyridine.

17. The method of claim 15, wherein said reacting step occurs in the presence of a copper catalyst and in a solvent selected from the group consisting of benzene, toluene, xylene, and glycol.

18. The method of claim 14, wherein said copolymer is a block copolymer or a graft copolymer.

19. The method of claim 18, wherein said block copolymer comprises repeating units having the formula: 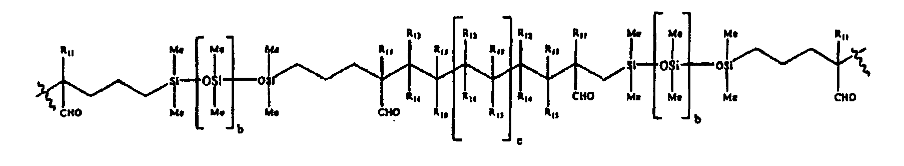
wherein R₁₁ is selected from the group consisting of methyl, ethyl, and phenyl;
R₁₂, R₁₃, R₁₄, and R₁₅ are independently selected from the group consisting of H, C₁ - C6 alkyl, C₆ - C₈ aryl, C1- C₁₀ heterocyclic, fluoro, C₁ - C₆ fluoroalkyl, acetate, acrylic, anhydride, and the like;
b is an integer from 10 to 200; and
c is an integer from 10 to 200.

20. A polymerizable composition comprising a functionalized siloxane having the formula: 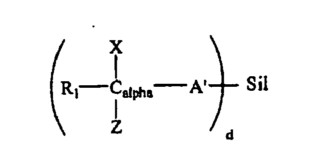 wherein
Z is aldehyde;
Cₐₗₚₕₐ is the first carbon adjacent to Z;
X is selected from the group consisting of hydrogen, chloride, bromide and iodide;
R₁ is selected from the group consisting of C₁-C₃ alkyl, C₆ aryl, C₁-C₃ alkyloxy, C₁-C₃ thioethers, diphenyl thiother, nitro, nitrile, C₁-C₃ ketone, C₁-C₃ ester, dimethylamine, diethylamine, diphenylamine, C₆ aryloxy, and C₆ aryl having a substition at the fourth carbon ring selected from nitro, nitrile, aldehyde, C₁-C₃ ketone, C₁-C₃ ester, C₁-C₃ alkyl, C₆ aryl, C₁-C₃ alkyloxy, C₁-C₃ thioethers, diphenyl thioether, dimethylamine, diethylamine, diphenylamine and C₆ aryloxy;
A' is an alkyl derived from an alkene substituent;
Sil is siloxane moiety; and
d is an integer from about 1 to about 40.

21. The composition of claim 20, wherein A' is selected from the group consisting of propyl, butyl, or pentyl.

22. The composition of claim 20, wherein R₁ is selected from the group consisting of methyl, ethyl, propyl, and phenyl.

23. The composition of claim 20, wherein said composition has functionalized siloxane having a formula selected from the group consisting of: 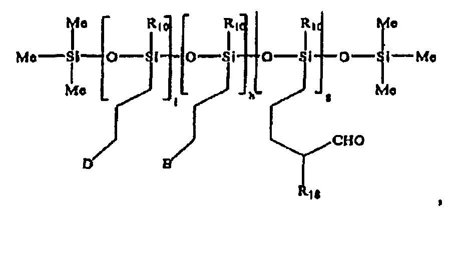 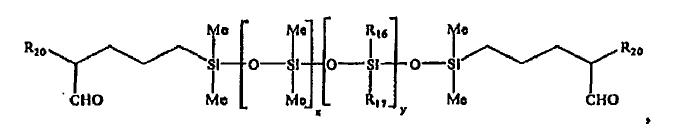 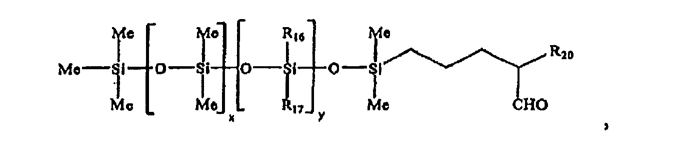 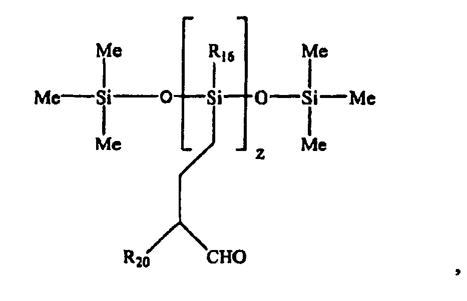 and 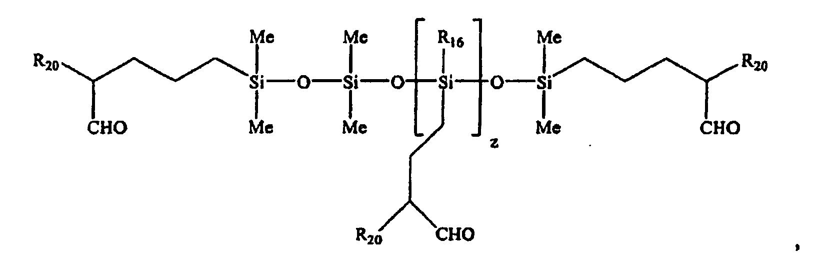
wherein R₁₀ is methyl or phenyl;
R₁₆ and R₁₇ are independently methyl or phenyl,
R₁₈ is selected from the group consisting of C₁ - C₃ alkyl, C₆ aryl, C₁ - C₃ alkyloxy, C₁ - C₃ thioethers, diphenyl thioether, nitro, nitrile, C₁ - C₃ ketone, C₁ - C₃ ester, dimethylamine, diethylamine, diphenylamine, C₆ aryloxy, and C₆ aryl having a substition at the fourth carbon ring selected from nitro, nitrile, aldehyde, C₁ - C₃ ketone, C₁ - C₃ ester, C₁ - C₃ alkyl, C₆ aryl, C₁ - C₃ alkyloxy, C₁ - C₃ thioethers, diphenyl thioether, dimethylamine, diethylamine, diphenylamine, and C₆ aryloxy.
R₂₀ is methyl, ethyl, or phenyl;
D is selected from the group consisting of ethylene, propylene, C₂ - C₅₀ alkyl, styrene, or 1-methyl styrene;
B is selected from the group consisting of epoxy having the formula: 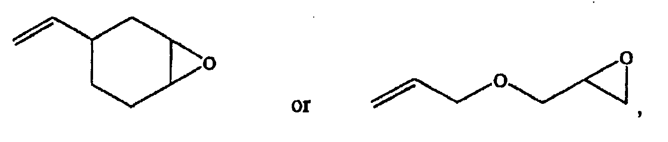 acrylic,
methacryloxy having the formula: 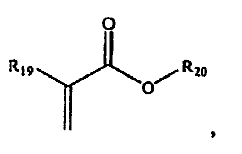
wherein R₁₉ is H or CH₃, and
R₂₀ is selected from the group consisting of
CH₃, C₂H₅, and CH₂CH₂OH,
and polyether having the formula: 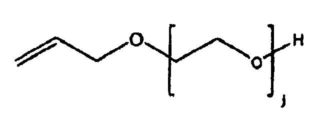
wherein j is an integer from 2 - 20;
x is an integer from 0 - 80,
y is an integer from 0 - 80,
x + y ≠ 0, and
z is an integer from 1 - 40.
k is an integer from 3 - 40; and
i+h+g=k, wherein g ≠ 0.

24. A polymeric composition comprising repeating units derived from the polymerizable composition of claim 20.

25. The polymeric composition of claim 24 comprising a block or graph copolymer.

26. The polymeric composition of claim 25 wherein said repeating unit has the formula: 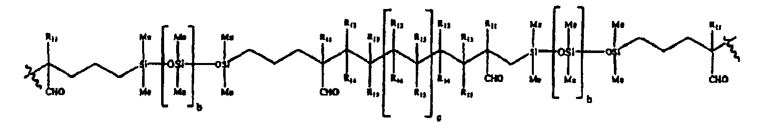
Wherein R₁₁ is selected from the group consisting of methyl, ethyl, and phenyl;
R₁₂, R₁₃, R₁₄, and R₁₅ are independently selected from the group consisting of H, C₁-C₆ alkyl, C₆-C₈ aryl, C₁-C₁₀ heterocyclic, fluoro, C₁-C₆ fluoroalkyl, acetate, acrylic, anhydride, and the like;
b is an integer from 10 to 200; and
c is an integer from 10 to 200.

27. A method of producing a functionalized siloxane comprising the steps of:
(a) preparing a compound comprising an aldehyde moiety and an unsaturated carbon-carbon bond; and
(b) attaching said compound to said siloxane via a hydrosilylation reaction.

## Patentansprüche

1. Verfahren zur Herstellung von funktionalisierten Siloxanen, bei dem man:
(a) eine Verbindung mit einer Aldehydgruppierung bereitstellt, die die Formel (II) aufweist: 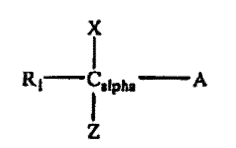 worin:
Z für Aldehyd steht;
Cₐₗₚₕₐ der erste Kohlenstoff in Nachbarschaft zu Z ist;
X aus der Gruppe bestehend aus Wasserstoff, Chlorid, Bromid und Iodid ausgewählt ist;
R₁ aus der Gruppe bestehend aus C₁-C₃-Alkyl, C₆-Aryl, C₁-C₃-Alkyloxy, C₁-C₃-Thioethern, Diphenylthioether, Nitro, Nitril, C₁-C₃-Keton, C₁-C₃-Ester, Dimethylamin, Diethylamin, Diphenylamin, C₆-Aryloxy und C₆-Aryl mit einer unter Nitro, Nitril, Aldehyd, C₁-C₃-Keton, C₁-C₃-Ester, C₁-C₃-Alkyl, C₆-Aryl, C₁-C₃-Alkyloxy, C₁-C₃-Thioethern, Diphenylthioether, Dimethylamin, Diethylamin, Diphenylamin und C₆-Aryloxy ausgewählten Substitution am vierten Kohlenstoff ausgewählt ist und
A für C₂-C₆-Alken oder C₂-C₆-Alkin steht; und (b) die Verbindung der Formel II mit einem Siloxan zu einem funktionalisierten Siloxan verknüpft.

2. Verfahren nach Anspruch 1, bei dem A aus der Gruppe bestehend aus 2-Vinyl, 3-Allyl oder 4-Butenyl ausgewählt ist.

3. Verfahren nach Anspruch 1, bei dem R1 aus der Gruppe bestehend aus Methyl, Ethyl, Propyl und Phenyl ausgewählt ist.

4. Verfahren nach Anspruch 1, wobei man die Verbindung der Formel II aus der Gruppe bestehend aus 2-Methyl-4-pentenal, 2-Methyl-2-brom-4-pentenal, 2-Ethyl-4-pentenal, 2-Ethyl-2-brom-4-pentenal, 2-Phenyl-4-pentenal und 2-Phenyl-2-brom-4-pentenal auswählt.

5. Verfahren nach Anspruch 1, bei dem sich die Verbindung der Formel II von 2-Methyl-(1,1'-di-methoxy)-4-penten, 2-Ethyl-(1,1'-dimethoxy)-4-penten, 2-Phenyl-(1,1'-dimethoxy)-4-penten, 2-Methyl--2-brom-(1,1'-dimethoxy)-4-penten, 2-Ethyl-2-brom-(1,1'-dimethoxy)-4-penten oder 2-Phenyl-2-brom-(1,1'-dimethoxy)-4-penten ableitet.

6. Verfahren nach Anspruch 1, bei dem die Verbindung der Formel II die folgende Formel aufweist: 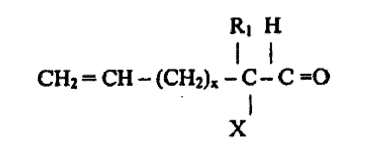
worin R₁ für Methyl oder Phenyl steht;
X für Wasserstoff steht und
x für 1 oder 2 steht.

7. Verfahren nach Anspruch 1, wobei das Siloxan die folgende Formel aufweist: 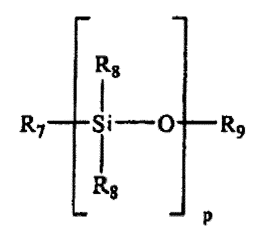
worin R₇ aus der Gruppe bestehend aus H, geradem oder verzweigtem C₁-C₅₀-Alkyl, substituiertem oder unsubsitutiertem C₃-C₁₂-Cyclyl, C₁-C₁₁-Heterocyclyl, C₆-C₈-Aryl, C₆-C₈-Aryloxy, C₁-C₁₂-Alkoxy, C₂-C₁₂-Di-alkylamino, C₁-C₁₂-Alkylthio, C₁-C₁₂-Fluoralkyl, C₁-C₁₂-Epoxy, C₁-C₆-Acryl oder -Methacryloxy, C₆-C₅₀-Polyether und einer Kombination davon ausgewählt ist;
R₈ unabhängig aus der Gruppe bestehend aus H, -O-R₉, an Si gebundenes O, wobei sich eine cyclische oder polycyclische Struktur ergibt, geradem oder verzweigtem C₁-C₅₀-Alkyl, substituiertem oder unsubsitutiertem C₃-C₁₂-Cyclyl, C₁-C₁₁-Heterocyclyl, C₆-C₈-Aryl, C₆-C₈-Aryloxy, C₁-C₁₂-Alkoxy, C₂-C₁₂-Di-alkylamino, C₁-C₁₂-Alkylthio, C₁-C₁₂-Fluoralkyl, C₁-C₁₂-Epoxy, C₁-C₆-Acryl oder -Methacryloxy, C₆-C₅₀-Polyether und einer Kombination davon ausgewählt ist;
R₉ für 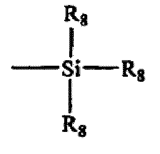 steht und
p für eine ganze Zahl von 3 bis 40 steht,
mit der Maßgabe, dass für nichtcyclische Siloxane R₇ = H und R₈ ≠ H für monohydridfunktionelle Siloxane; R₇ = H und das terminale R₈ = H für hydridendverkappte Siloxane und R₇ ≠ H, das terminale R₈ ≠ H und mindestens ein R₈ = H für Rechenhydridsiloxane.

8. Verfahren nach Anspruch 7, bei dem das Siloxan eine Formel aus der Gruppe bestehend aus: 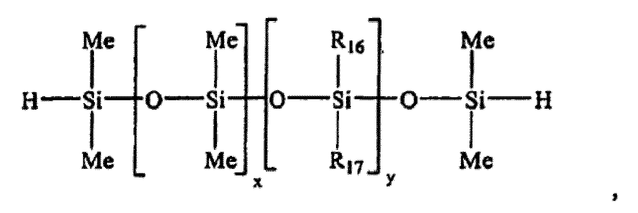 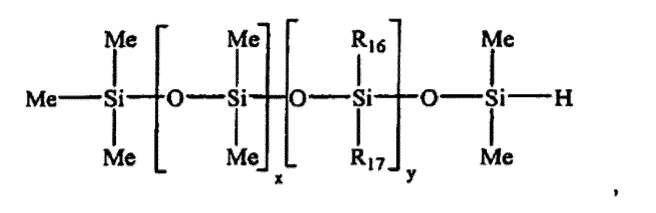 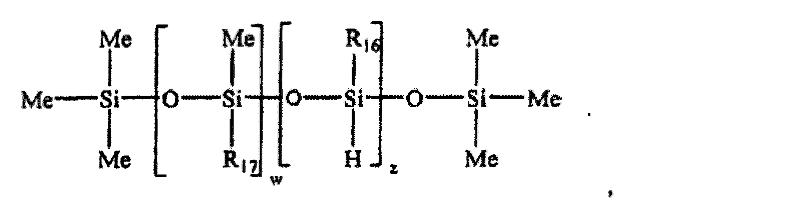 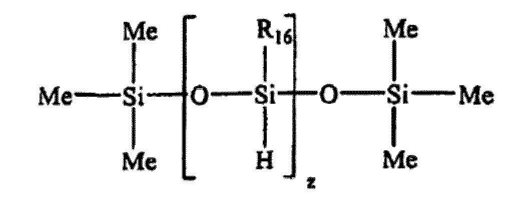 und 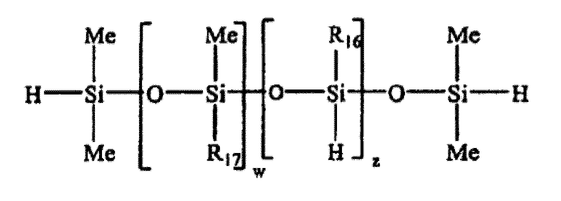 aufweist,
worin R₁₆ und R₁₇ unabhängig für Methyl oder Phenyl stehen,
x für eine ganze Zahl von 0-80 steht,
y für eine ganze Zahl von 0-80 steht,
x + y ≠ 0,
w + z für eine ganze Zahl von 3-40 steht und
z für eine ganze Zahl von 1 bis 40 steht.

9. Verfahren nach Anspruch 1, bei dem der Verknüpfungsschritt einen Hydrosilylierungsprozess umfasst.

10. Verfahren nach Anspruch 9 , bei dem der Hydrosilylierungsprozess in Gegenwart eines Platinkatalysators erfolgt.

11. Verfahren nach Anspruch 9, bei dem man ferner:
(c) eine Vinylverbindung mit dem funktionalisierten Siloxan verknüpft, wobei man die Vinylverbindung aus der Gruppe bestehend aus C₂-C₂₀-Alken, Styrol, Epoxy, Acryl, Acryloxy und C₄-C₂₀-Polyether auswählt.

12. Verfahren nach Anspruch 11, bei dem das funktionalisierte Siloxan die Formel 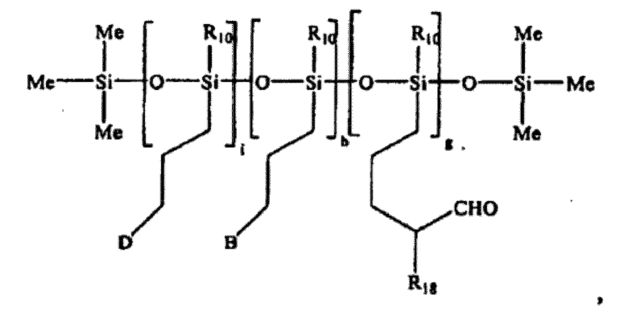 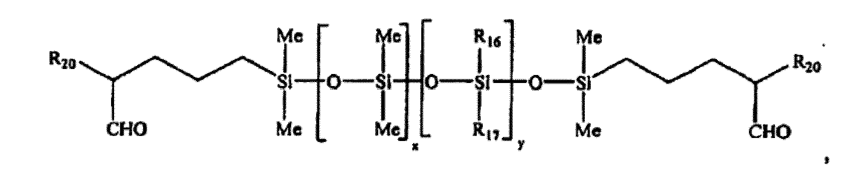 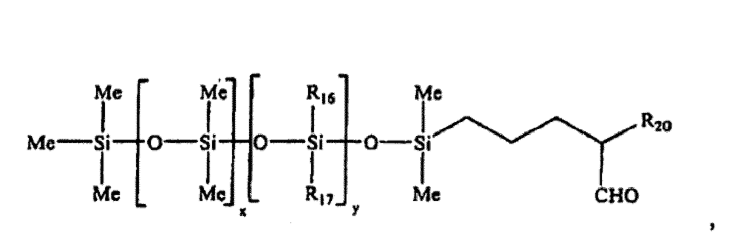 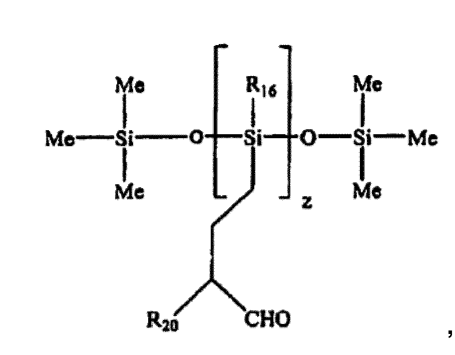 ,und 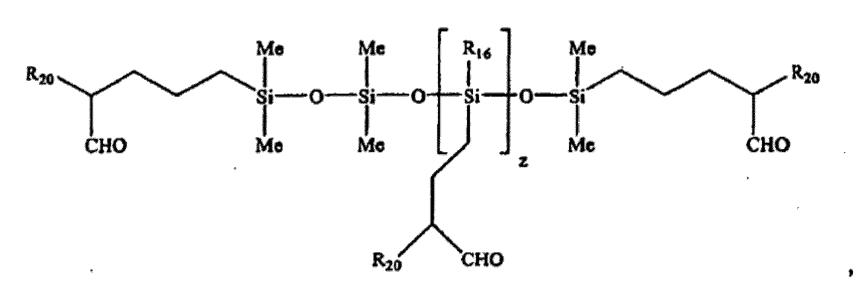 aufweist,
worin R₁₀ für Methyl oder Phenyl steht;
R₁₆ und R₁₇ unabhängig für Methyl oder Phenyl stehen;
R₁₈ aus der Gruppe bestehend aus C₁-C₃-Alkyl, C₆-Aryl, C₁-C₃-Alkyloxy, C₁-C₃-Thioethern, Diphenylthioether, Nitro, Nitril, C₁-C₃-Keton, C₁-C₃-Ester, Dimethylamin, Diethylamin, Diphenylamin, C₆-Aryloxy und C₆-Aryl mit einer unter Nitro, Nitril, Aldehyd, C₁-C₃-Keton, C₁-C₃-Ester, C₁-C₃-Alkyl, C₆-Aryl, C₁-C₃-Alkyloxy, C₁-C₃-Thioethern, Diphenylthioether, Dimethylamin, Diethylamin, Diphenylamin und C₆-Aryloxy ausgewählten Substitution am vierten Kohlenstoff ausgewählt ist;
R₂₀ für Methyl, Ethyl oder Phenyl steht;
D aus der Gruppe bestehend aus Ethylen, Propylen, C₂-C₅₀-Alkyl, Styrol oder 1-Methylstyrol ausgewählt ist;
B aus der Gruppe bestehend aus Epoxy mit der Formel: 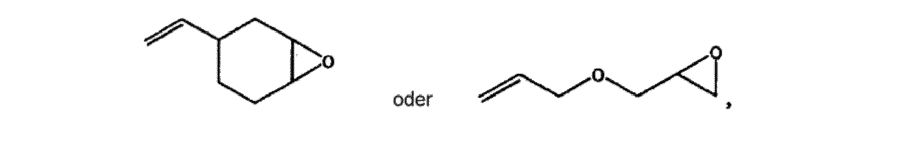 Acryl,
Methacryloxy mit der Formel: 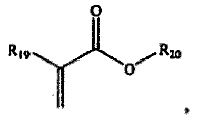
worin R₁₉ für H oder CH₃ steht und
R₂₀ aus der Gruppe bestehend aus CH₃,
C₂H₅ und CH₂CH₂OH ausgewählt ist,
und Polyether mit der Formel: 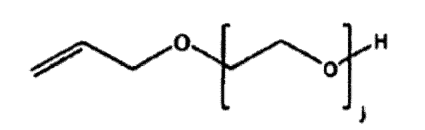
worin j für eine ganze Zahl von 2-20 steht;
ausgewählt ist;
x für eine ganze Zahl von 0-80 steht;
y für eine ganze Zahl von 0-80 steht;
x + y ≠ 0 und
z für eine ganze Zahl von 1-40 steht;
k für eine ganze Zahl von 3-40 steht und
i + h + g = k, worin g ≠ 0.

13. Verfahren nach Anspruch 1, bei dem das funktionalisierte Siloxan eine cyclische oder polycyclische Struktur aufweist.

14. Verfahren zur Herstellung eines Copolymers, bei dem man:
(a) ein funktionalisiertes Siloxan gemäß Anspruch 1 bereitstellt,
(b) eine Vinylverbindung bereitstellt und
(c) das funktionalisierte Siloxan mit der Vinylverbindung umsetzt, wobei man ein Copolymer erhält.

15. Verfahren nach Anspruch 14, bei dem es sich bei der Vinylverbindung um ein Monomer oder Polymer mit einer vinylfunktionellen Gruppe handelt.

16. Verfahren nach Anspruch 15, bei dem man die Vinylverbindung aus der Gruppe bestehend aus Ethylen, Propylen, Styrol, N-Vinylpyrrolidon, Vinylidenfluorid, Chlorfluorethylen, Methylmetacrylat, Ethylmethacrylat, Acrylnitril, Hydroxyethylmethacrylat, Vinylacetat, Maleinsäureanhydrid, 3,3,3-Trifluor-1-propen, 2,3,3,3-Tetrafluor-1-propen, 1,3,3,3-Tetrafluor-1-propen, 1-Chlor-1,3,3,3-tetrafluor-1-propen, 2,2,3,3,3-Pentafluor-1-propen und 4-Vinylpyridin auswählt.

17. Verfahren nach Anspruch 15, bei dem der Umsetzungsschritt in Gegenwart eines Kupferkatalysators und in einem Lösungsmittel aus der Gruppe bestehend aus Benzol, Toluol, Xylol und Glykol erfolgt.

18. Verfahren nach Anspruch 14, bei dem es sich bei dem Copolymer um ein Blockcopolymer oder ein Pfropfcopolymer handelt.

19. Verfahren nach Anspruch 18, bei dem das Blockcopolymer Wiederholungseinheiten mit der Formel: 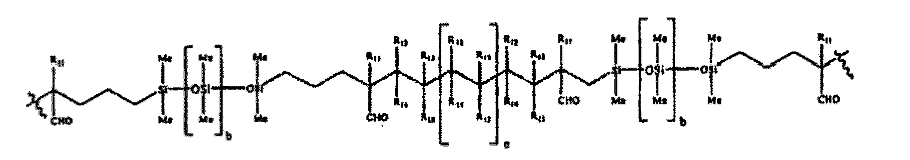
worin R₁₁ aus der Gruppe bestehend aus Methyl, Ethyl und Phenyl ausgewählt ist;
R₁₂, R₁₃, R₁₄ und R₁₅ unabhängig aus der Gruppe bestehend aus H, C₁-C₆-Alkyl, C₆-C₈-Aryl, C₁-C₁₀-Heterocyclyl, Fluor, C₁-C₆-Fluoralkyl, Acetat, Acryl, Anhydrid und dergleichen ausgewählt sind;
b für eine ganze Zahl von 10 bis 200 steht und
c für eine ganze Zahl von 10 bis 200 steht;
umfasst.

20. Polymerisierbare Zusammensetzung, umfassend ein funktionalisiertes Siloxan mit der Formel: 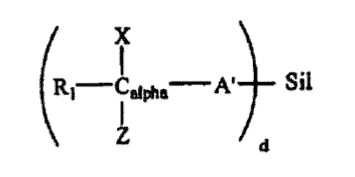 worin
Z für Aldehyd steht;
Cₐₗₚₕₐ der erste Kohlenstoff in Nachbarschaft zu Z ist;
X aus der Gruppe bestehend aus Wasserstoff, Chlorid, Bromid und Iodid ausgewählt ist;
R₁ aus der Gruppe bestehend aus C₁-C₃-Alkyl, C₆-Aryl, C₁-C₃-Alkyloxy, C₁-C₃-Thioethern, Diphenylthioether, Nitro, Nitril, C₁-C₃-Keton, C₁-C₃-Ester, Dimethylamin, Diethylamin, Diphenylamin, und C₆-Aryl C₆-Aryloxy mit einer unter Nitro, Nitril, Aldehyd, C₁-C₃-Keton, C₁-C₃-Ester, C₁-C₃-Alkyl, C₆-Aryl, C₁-C₃-Alkyloxy, C₁-C₃-Thioethern, Diphenylthioether, Dimethylamin, Diethylamin, Diphenylamin und C₆-Aryloxy ausgewählten Substitution am vierten Kohlenstoff ausgewählt ist;
A' für ein Alkyl, das sich von einem Alkensubstituenten ableitet, steht;
Sil für eine Siloxangruppierung steht und
d für eine ganze Zahl von etwa 1 bis etwa 40 steht.

21. Zusammensetzung nach Anspruch 20, wobei A' aus der Gruppe bestehend aus Propyl, Butyl oder Pentyl ausgewählt ist.

22. Zusammensetzung nach Anspruch 20, wobei R₁ aus der Gruppe bestehend aus Methyl, Ethyl, Propyl und Phenyl ausgewählt ist.

23. Zusammensetzung nach Anspruch 20, wobei das funktionalisierte Siloxan eine Formel aus der Gruppe bestehend aus: 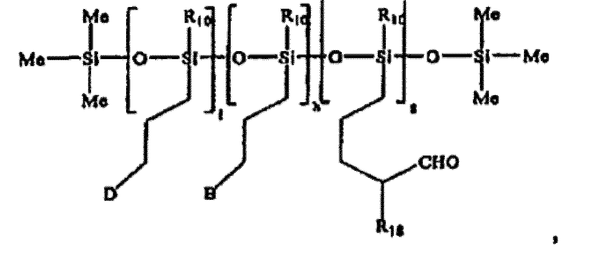 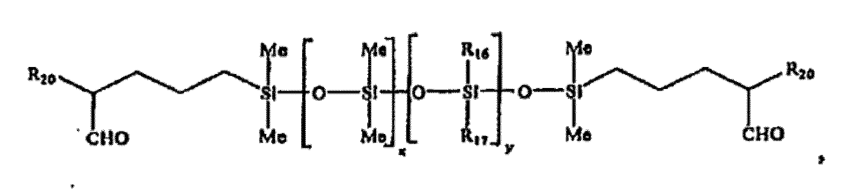 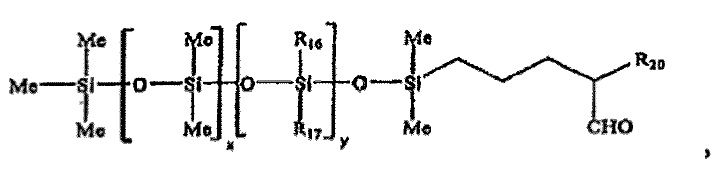 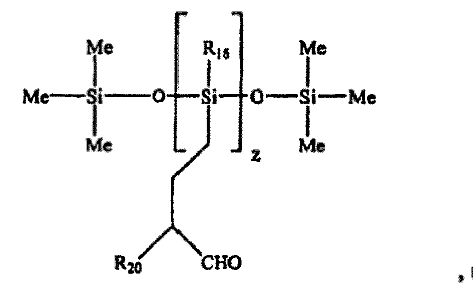 , und 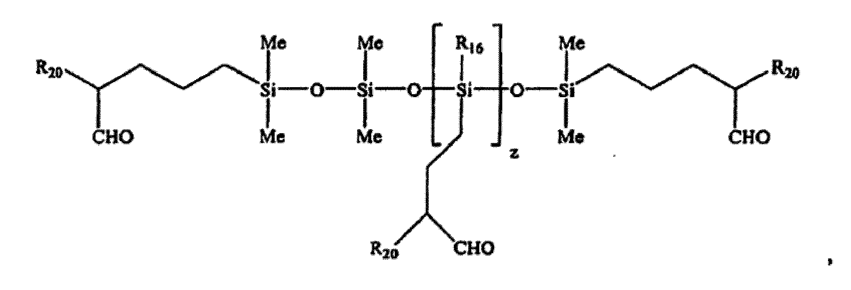 aufweist,
worin R₁₀ für Methyl oder Phenyl steht;
R₁₆ und R₁₇ unabhängig für Methyl oder Phenyl stehen;
R₁₈ aus der Gruppe bestehend aus C₁-C₃-Alkyl, C₆-Aryl, C₁-C₃-Alkyloxy, C₁-C₃-Thioethern, Diphenylthioether, Nitro, Nitril, C₁-C₃-Keton, C₁-C₃-Ester, Dimethylamin, Diethylamin, Diphenylamin, C₆-Aryloxy und C₆-Aryl mit einer unter Nitro, Nitril, Aldehyd, C₁-C₃-Keton, C₁-C₃-Ester, C₁-C₃-Alkyl, C₆-Aryl, C₁-C₃-Alkyloxy, C₁-C₃-Thioethern, Diphenylthioether, Dimethylamin, Diethylamin, Diphenylamin und C₆-Aryloxy ausgewählten Substitution am vierten Kohlenstoff ausgewählt ist;
R₂₀ für Methyl, Ethyl oder Phenyl steht;
D aus der Gruppe bestehend aus Ethylen, Propylen, C₂-C₅₀-Alkyl, Styrol oder 1-Methylstyrol ausgewählt ist;
B aus der Gruppe bestehend aus Epoxy mit der Formel: 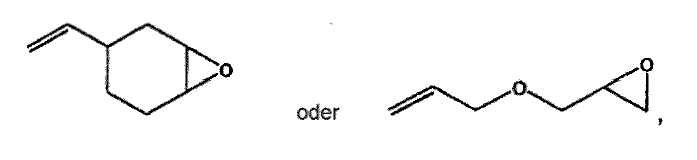 Acryl,
Methacryloxy mit der Formel: 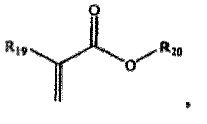
worin R₁₉ für H oder CH₃ steht und
R₂₀ aus der Gruppe bestehend aus CH₃,
C₂H₅ und CH₂CH₂OH ausgewählt ist,
und Polyether mit der Formel: 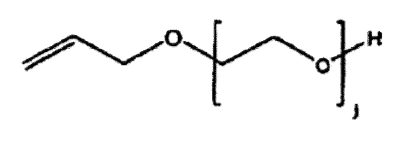
worin j für eine ganze Zahl von 2-20 steht;
ausgewählt ist;
x für eine ganze Zahl von 0-80 steht;
y für eine ganze Zahl von 0-80 steht;
x + y ≠ 0 und
z für eine ganze Zahl von 1-40 steht;
k für eine ganze Zahl von 3-40 steht und
i + h + g = k, worin g ≠ 0.

24. Polymerzusammensetzung, umfassend Wiederholungseinheiten, die sich von der polymerisierbaren Zusammensetzung nach Anspruch 20 ableiten.

25. Polymerzusammensetzung nach Anspruch 24, umfassend ein Block- oder Pfropfcopolymer.

26. Polymerzusammensetzung nach Anspruch 25, wobei die Wiederholungseinheit die Formel: 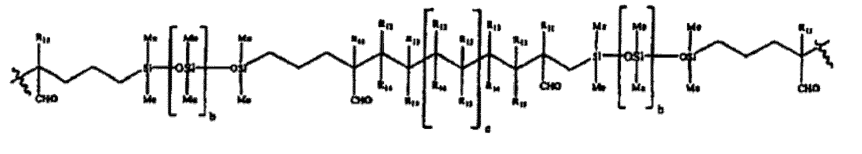 aufweist,
worin R₁₁ aus der Gruppe bestehend aus Methyl, Ethyl und Phenyl ausgewählt ist;
R₁₂, R₁₃, R₁₄ und R₁₅ unabhängig aus der Gruppe bestehend aus H, C₁-C₆-Alkyl, C₆-C₈-Aryl, C₁-C₁₀-Heterocyclyl, Fluor, C₁-C₆-Fluoralkyl, Acetat, Acryl, Anhydrid und dergleichen ausgewählt sind;
b für eine ganze Zahl von 10 bis 200 steht und
c für eine ganze Zahl von 10 bis 200 steht.

27. Verfahren zur Herstellung eines funktionalisierten Siloxans, bei dem man:
(a) eine Verbindung mit einer Aldehydgruppierung und einer ungesättigten Kohlenstoff-Kohlenstoff-Bindung bereitstellt und
(b) die Verbindung über eine Hydrosilylierungsreaktion mit dem Siloxan verknüpft.

## Revendications

1. Méthode de préparation de siloxanes fonctionnalisés, comprenant les étapes consistant à :
(a) fournir un composé comprenant un motif aldéhyde répondant à la formule (II) : 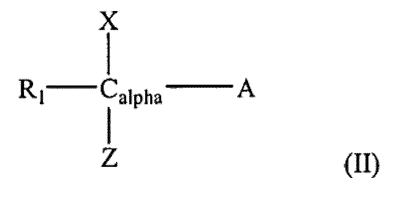 dans laquelle
Z est aldéhyde ;
Cₐₗₚₕₐ est le premier carbone adjacent à Z;
X est choisi dans le groupe constitué par hydrogène, chlorure, bromure, et iodure ;
R₁ est choisi dans le groupe constitué par C₁-C₃ alkyle, C₆ aryle, C₁-C₃ alkyloxy, C₁-C₃ thioéthers, diphénylthioéther, nitro, nitrile, C₁-C₃ cétone, C₁-C₃ ester, diméthylamine, diéthylamine, diphénylamine, C₆ aryloxy, et C₆ aryle ayant une substitution au niveau du quatrième carbone du cycle choisie parmi nitro, nitrile, aldéhyde, C₁-C₃ cétone, C₁-C₃ ester, C₁-C₃ alkyle, C₆ aryle, C₁-C₃ alkyloxy, C₁-C₃ thioéthers, diphénylthioéther, diméthylamine, diéthylamine, diphénylamine, et C₆ aryloxy ; et
A est C₂-C₆ alcène ou C₂-C₆ alcyne ; et
(b) fixer ledit composé de formule II à un siloxane afin de former un siloxane fonctionnalisé.

2. Méthode selon la revendication 1, dans laquelle A est choisi dans le groupe constitué par 2-vinyle, 3-allyle, ou 4-butényle.

3. Méthode selon la revendication 1, dans laquelle R₁ est choisi dans le groupe constitué par méthyle, éthyle, propyle, et phényle.

4. Méthode selon la revendication 1, dans laquelle ledit composé de formule II est choisi dans le groupe constitué par 2-méthyl-4-penténal, 2-méthyl-2-bromo-4-penténal, 2-éthyl-4-penténal, 2-éthyl-2-bromo-4-penténal, 2-phényl-4-penténal, et 2-phényl-2-bromo-4-penténal.

5. Méthode selon la revendication 1, dans laquelle ledit composé de formule II est dérivé de 2-méthyl-(1,1'-diméthoxy)-4-pentène, 2-éthyl-(1,1'-diméthoxy)-4-pentène, 2-phényl-(1,1'-diméthoxy)-4-pentène, 2-méthyl-2-bromo-(1,1'-diméthoxy)-4-pentène, 2-éthyl-2-bromo-(1,1'-diméthoxy)-4-pentène, ou 2-phényl-2-bromo-(1,1'-diméthoxy)-4-pentène.

6. Méthode selon la revendication 1, dans laquelle ledit composé de formule II répond à la formule : 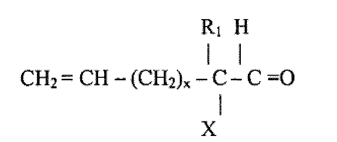 dans laquelle
R₁ est méthyle ou phényle ;
X est hydrogène; et
x vaut 1 ou 2.

7. Méthode selon la revendication 1, dans laquelle ledit siloxane répond à la formule : 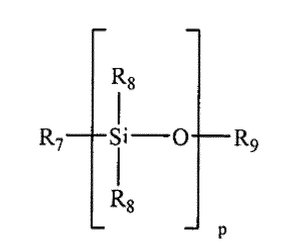 dans laquelle
R₇ est choisi dans le groupe constitué par H, C₁-C₅₀ alkyle linéaire ou ramifié, C₃-C₁₂ cyclique substitué ou non substitué, C₁-C₁₁, hétérocyclique, C₆-C₈ aryle, C₆-C₈ aryloxy, C₁-C₁₂ alcoxy, C₂-C₁₂ dialkylamino, C₁-C₁₂ alkylthio, C₁-C₁₂ fluoroalkyle, C₁-C₁₂ époxy, C₁-C₆ acrylique ou méthacryoxy, C₆-C₅₀ polyéther, et certaines combinaisons de ceux-ci ;
R₈ est choisi indépendamment dans le groupe constitué par H, -O-R₉, O lié à Si où on obtient une structure cyclique ou polycyclique, C₁-C₅₀ alkyle linéaire ou ramifié, C₃-C₁₂ cyclique substitué ou non substitué, C₁-C₁₁ hétérocyclique, C₆-C₈ aryle, C₆-C₈ aryloxy, C₁-C₁₂ alcoxy, C₂-C₁₂ dialkylamino, C₁-C₁₂ alkylthio, C₁-C₁₂ fluoroalkyle, C₁-C₁₂ époxy, C₁-C₆ acrylique ou méthacryoxy, C₆-C₅₀ polyéther, ou certaines combinaisons de ceux-ci ;
R₉ est 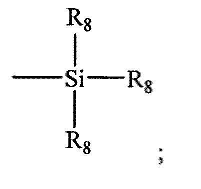
et p est un nombre entier allant de 3 à 40,
à condition que pour les siloxanes non cycliques, R₇ = H et R₈ ≠ H pour les siloxanes à terminaison mono-hydrure ; R₇ = H et la terminaison R₈ = H pour les siloxanes à coiffe terminale hydrure ; et R₇ ≠ H, la terminaison R₈ ≠ H, et au moins l'un parmi R₈ = H pour les siloxanes à hydrure de type râteau.

8. Méthode selon la revendication 7, dans laquelle ledit siloxane répond à une formule choisie dans le groupe constitué par : 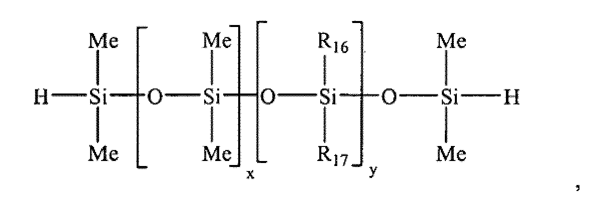 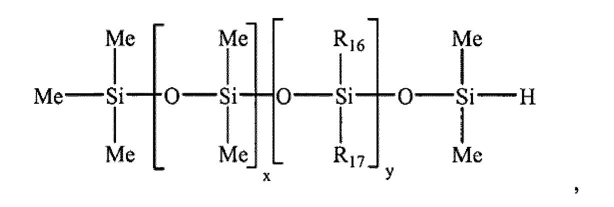 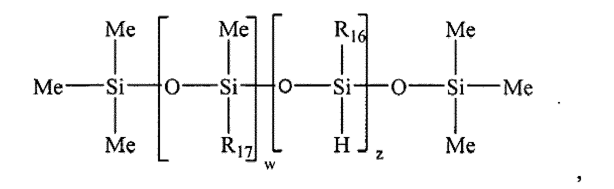 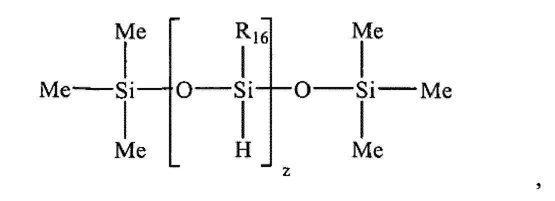 et 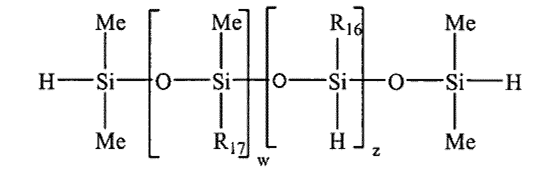 dans laquelle
R₁₆ et R₁₇ sont indépendamment méthyle ou phényle,
x est un nombre entier valant 0-80,
y est un nombre entier valant 0-80,
x + y ≠ 0,
w + z est un nombre entier valant 3-40, et
z est un nombre entier valant 1-40.

9. Méthode selon la revendication 1, dans laquelle ladite étape de fixation comprend un procédé d'hydrosilylation.

10. Méthode selon la revendication 9, dans laquelle ledit procédé d'hydrosilylation a lieu en présence d'un catalyseur à base de platine.

11. Méthode selon la revendication 9, comprenant en outre l'étape consistant à :
(c) fixer un composé vinylique audit siloxane fonctionnalisé, où ledit composé vinylique est choisi dans le groupe constitué par C₂-C₂₀ alcène, styrène, époxy, acrylique, acyloxy, et C₄-C₂₀ polyéther.

12. Méthode selon la revendication 11, dans laquelle ledit siloxane fonctionnalisé répond à la formule : 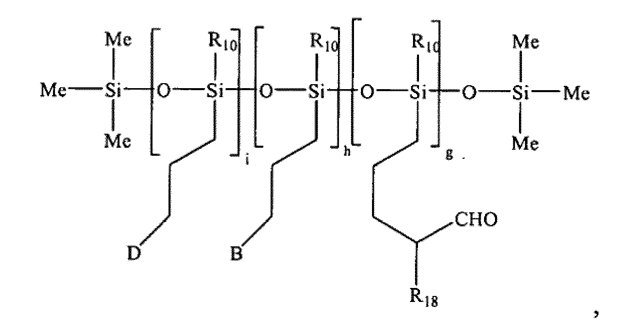 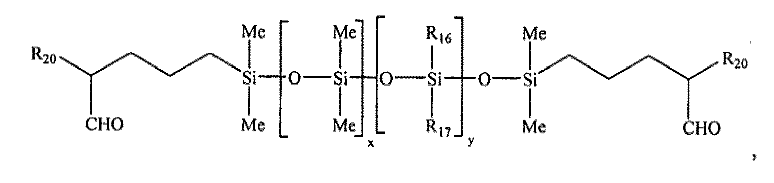 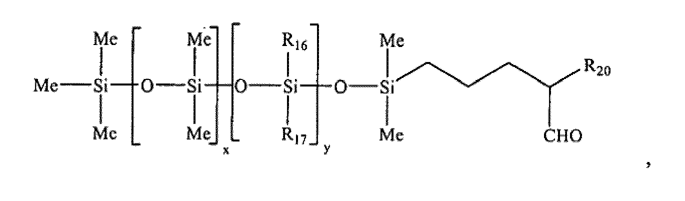 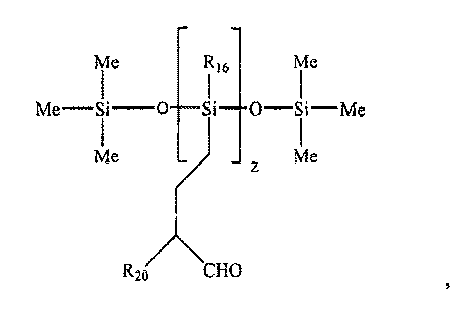 et 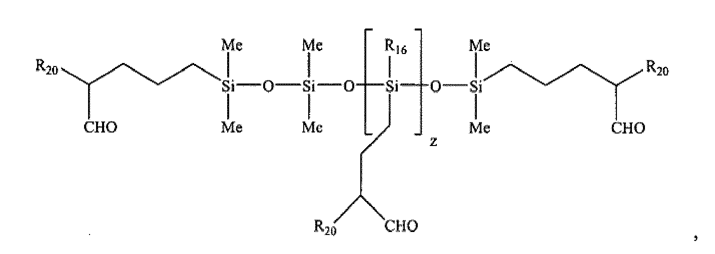 dans laquelle
R₁₀ est méthyle ou phényle ;
R₁₆ et R₁₇ sont indépendamment méthyle ou phényle ;
R₁₈ est choisi dans le groupe constitué par C₁-C₃ alkyle, C₆ aryle, C₁-C₃ alkyloxy, C₁-C₃ thioéthers, diphénylthioéther, nitro, nitrile, C₁-C₃ cétone, C₁-C₃ ester, diméthylamine, diéthylamine, diphénylamine, C₆ aryloxy, et C₆ aryle ayant une substitution au niveau du quatrième carbone du cycle choisie parmi nitro, nitrile, aldéhyde, C₁-C₃ cétone, C₁-C₃ ester, C₁-C₃ alkyle, C₆ aryle, C₁-C₃ alkyloxy, C₁-C₃ thioéthers, diphénylthioéther, diméthylamine, diéthylamine, diphénylamine, et C₆ aryloxy ;
R₂₀ est méthyle, éthyle, ou phényle ;
D est choisi dans le groupe constitué par éthylène, propylène, C₂-C₅₀alkyle, styrène, ou 1-méthylstyrène ;
B est choisi dans le groupe constitué par époxy répondant à la formule : 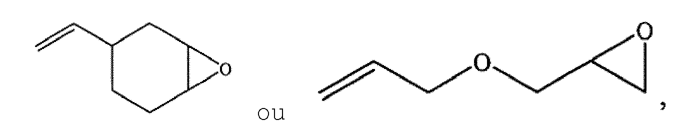 acrylique,
méthacryloxy répondant à la formule : 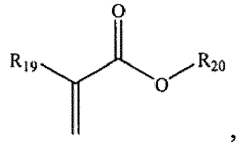
dans laquelle
R₁₉ est H ou CH₃, et
R₂₀ est choisi dans le groupe constitué par CH₃, C₂H₅, et CH₂CH₂OH, et
polyéther répondant à la formule : 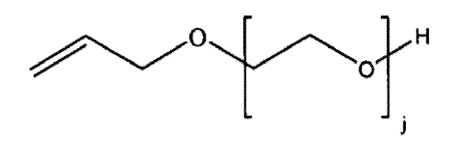
dans laquelle j est un nombre entier valant 2-20;
x est un nombre entier valant 0-80 ;
y est un nombre entier valant 0-80 ;
x + y ≠ 0 ; et
z est un nombre entier valant 1-40 ;
k est un nombre entier valant 3-40 ; et
i + h + g = k, où g ≠ 0.

13. Méthode selon la revendication 1, dans laquelle ledit siloxane fonctionnalisé possède une structure cyclique ou polycyclique.

14. Méthode de production de copolymères, comprenant les étapes consistant à :
(a) fournir un siloxane fonctionnalisé selon la revendication 1,
(b) fournir un composé vinylique, et
(c) faire réagir ledit siloxane fonctionnalisé avec ledit composé vinylique afin de produire un copolymère.

15. Méthode selon la revendication 14, dans laquelle ledit composé vinylique est un monomère ou polymère ayant un groupement vinyle fonctionnel.

16. Méthode selon la revendication 15, dans laquelle ledit composé vinylique est choisi dans le groupe constitué par éthylène, propylène, styrène, N-vinylpyrrolidone, fluorure de vinylidène, chlorofluoroéthylène, méthacrylate de méthyle, méthacrylate d'éthyle, acrylonitrile, méthacrylate d'hydroxyéthyle, acétate de vinyle, anhydride maléique, 3,3,3-trifluoro-1-propène, 2,3,3,3-tétrafluoro-1-propène, 1,3,3,3-tétrafluoro-1-propène, 1-chloro-1,3,3,3-tétrafluoro-1-propène, 2,2,3,3,3-pentafluoro-1-propène, et 4-vinylpyridine.

17. Méthode selon la revendication 15, dans laquelle ladite étape de réaction a lieu en présence d'un catalyseur à base de cuivre et dans un solvant choisi dans le groupe constitué par le benzène, le toluène, le xylène, et le glycol.

18. Méthode selon la revendication 14, dans laquelle ledit copolymère est un copolymère bloc ou un copolymère greffé.

19. Méthode selon la revendication 18, dans laquelle ledit copolymère bloc comprend des motifs répétitifs répondant à la formule : 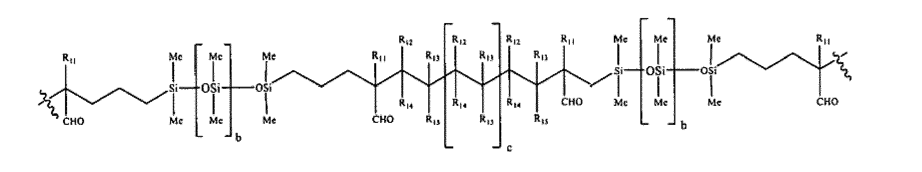 dans laquelle
R₁₁ est choisi dans le groupe constitué par méthyle, éthyle, et phényle ;
R₁₂, R₁₃, R₁₄, et R₁₅ sont choisis indépendamment dans le groupe constitué par H, C₁-C₆ alkyle, C₆-C₈ aryle, C₁-C₁₀ hétérocyclique, fluoro, C₁-C₆ fluoroalkyle, acétate, acrylique, anhydride, et similaires ;
b est un nombre entier allant de 10 à 200 ; et
c est un nombre entier allant de 10 à 200.

20. Composition polymérisable comprenant un siloxane fonctionnalisé répondant à la formule : 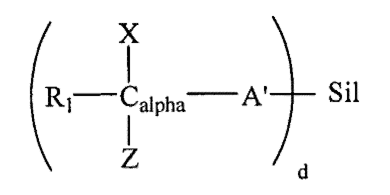 dans laquelle
Z est un aldéhyde ;
Cₐₗₚₕₐ est le premier carbone adjacent à Z ;
X est choisi dans le groupe constitué par hydrogène, chlorure, bromure, et iodure.
R₁ est choisi dans le groupe constitué par C₁-C₃ alkyle, C₆ aryle, C₁-C₃ alkyloxy, C₁-C₃ thioéthers, diphénylthioéther, nitro, nitrile, C₁-C₃ cétone, C₁-C₃ ester, diméthylamine, diéthylamine, diphénylamine, C₆ aryloxy, et C₆ aryle ayant une substitution au niveau du quatrième carbone du cycle choisie parmi nitro, nitrile, aldéhyde, C₁-C₃ cétone, C₁-C₃ ester, C₁-C₃ alkyle, C₆ aryle, C₁-C₃ alkyloxy, C₁-C₃ thioéthers, diphénylthioéther, diméthylamine, diéthylamine, diphénylamine, et C₆ aryloxy. A' est un alkyle dérivé d'un substituant alcène ;
Sil est un motif siloxane ; et
d est un nombre entier allant d'environ 1 à environ 40.

21. Composition selon la revendication 20, dans laquelle A' est choisi dans le groupe constitué par propyle, butyle ou pentyle.

22. Composition selon la revendication 20, dans laquelle R₁ est choisi dans le groupe constitué par méthyle, éthyle, propyle, et phényle.

23. Composition selon la revendication 20, **caractérisée en ce que** ladite composition possède un siloxane fonctionnalisé répondant à une formule choisie dans le groupe constitué par : 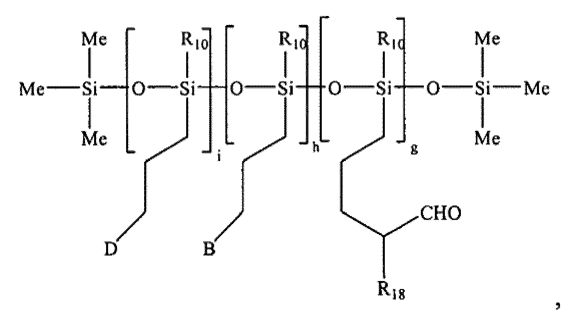 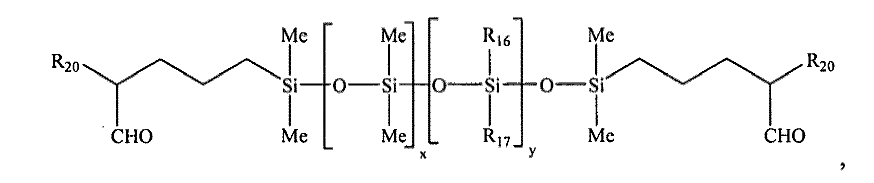 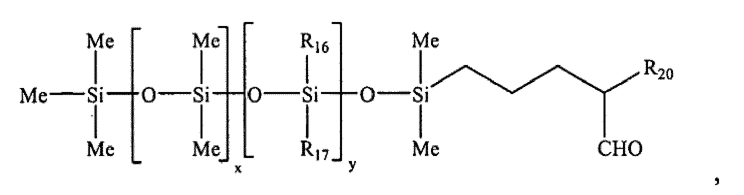 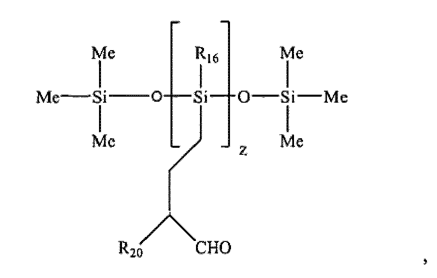 et 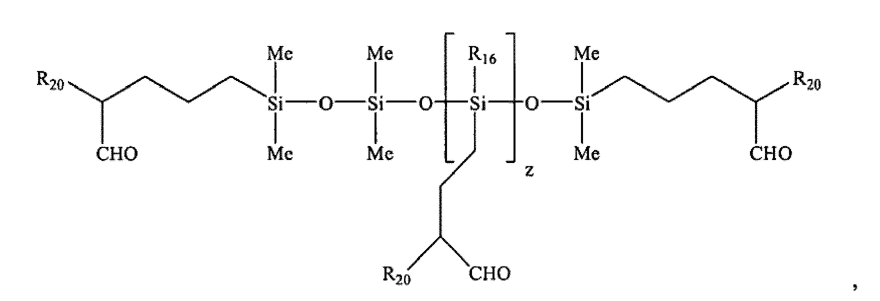 dans laquelle
R₁₀ est méthyle ou phényle ;
R₁₆ et R₁₇ sont indépendamment méthyle ou phényle ;
R₁₈ est choisi dans le groupe constitué par C₁-C₃ alkyle, C₆ aryle, C₁-C₃ alkyloxy, C₁-C₃ thioéthers, diphénylthioéther, nitro, nitrile, C₁-C₃ cétone, C₁-C₃ ester, diméthylamine, diéthylamine, diphénylamine, C₆ aryloxy, et C₆ aryle ayant une substitution au niveau du quatrième carbone du cycle choisie parmi nitro, nitrile, aldéhyde, C₁-C₃ cétone, C₁-C₃ ester, C₁-C₃ alkyle, C₆ aryle, C₁-C₃ alkyloxy, C₁-C₃ thioéthers, diphénylthioéther, diméthylamine, diéthylamine, diphénylamine, et C₆ aryloxy ;
R₂₀ est méthyle, éthyle, ou phényle ;
D est choisi dans le groupe constitué par éthylène, propylène, C₂-C₅₀alkyle, styrène, ou 1-méthylstyrène ;
B est choisi dans le groupe constitué par époxy répondant à la formule : 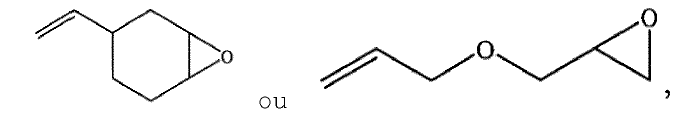 acrylique,
méthacryloxy répondant à la formule : 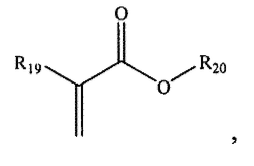
dans laquelle
R₁₉ est H ou CH₃, et
R₂₀ est choisi dans le groupe constitué par CH₃, C₂H₅, et CH₂CH₂OH, et
polyéther répondant à la formule : 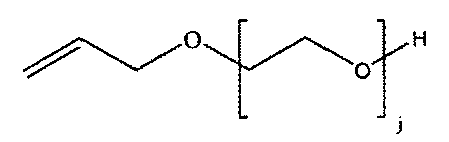
dans laquelle j est un nombre entier valant 2-20;
x est un nombre entier valant 0-80 ;
y est un nombre entier valant 0-80 ;
x + y ≠ 0 ; et
z est un nombre entier valant 1-40 ;
k est un nombre entier valant 3-40 ; et
i + h + g = k, où g : ≠ 0.

24. Composition polymère comprenant des motifs répétitifs dérivés de la composition polymérisable selon la revendication 20.

25. Composition polymère selon la revendication 24, comprenant un copolymère bloc ou greffé.

26. Composition polymère selon la revendication 25, dans laquelle ledit motif répétitif répond à la formule : 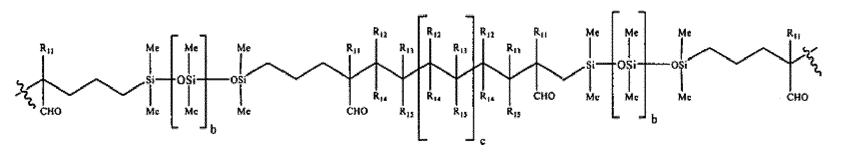 dans laquelle
R₁₁ est choisi dans le groupe constitué par méthyle, éthyle, et phényle ;
R₁₂, R₁₃, R₁₄, et R₁₅ sont choisis indépendamment dans le groupe constitué par H, C₁-C₆ alkyle, C₆-C₈ aryle, C₁-C₁₀ hétérocyclique, fluoro, C₁-C₆ fluoroalkyle, acétate, acrylique, anhydride, et similaires ;
b est un nombre entier allant de 10 à 200 ; et
c est un nombre entier allant de 10 à 200.

27. Méthode de production d'un siloxane fonctionnalisé, comprenant les étapes consistant à :
(a) préparer un composé comprenant un motif aldéhyde et une liaison carbone-carbone insaturée ; et
(b) fixer ledit composé audit siloxane par l'intermédiaire d'une réaction d'hydrosilylation.
